# EUROPEAN PATENT APPLICATION

(11) **EP 1 653 725 A2**
(43) Date of publication of application: **03.05.2006**
(21) Application number: 05256667.6
(22) Date of filing: 27.10.2005
(51) Int. Cl.: H04N 1/32

(54) **Document-management and authentication service device and method, program and recording medium**

(30) Priority: 27.10.2004 JP 2004312508; 06.10.2005 JP 2005293891
(71) Applicant: Ricoh Company, Ltd., Tokyo 143-8555 (JP)
(72) Inventor: Kawada, Jun, Kanagawa (JP); Oseto, Futoshi, Yokohama-shi Kanagawa (JP)
(74) Representative: Mounteney, Simon James

(57) **Abstract**

In a document-management service device including a document-management service unit, a certification information acquisition request containing information specifying an entry limit and/or information specifying a valid duration is received from a client which requests acquisition of a certification information concerning a document. The certification information is created in response to the certification information acquisition request, and transmitted to the client. A document operation request concerning the document is received from the client, the document operation request containing the certification information. A document operation is performed to the document by using an access right of a user of the certification information, in response to the document operation request.

## Description

### BACKGROUND OF THE INVENTION

### 1. Field of the Invention

The present invention relates to a document-management service device, an authentication service device, a document-management service program, an authentication service program, a recording medium, a document-management service method, and an authentication service method.

### 2. Description of the Related Art

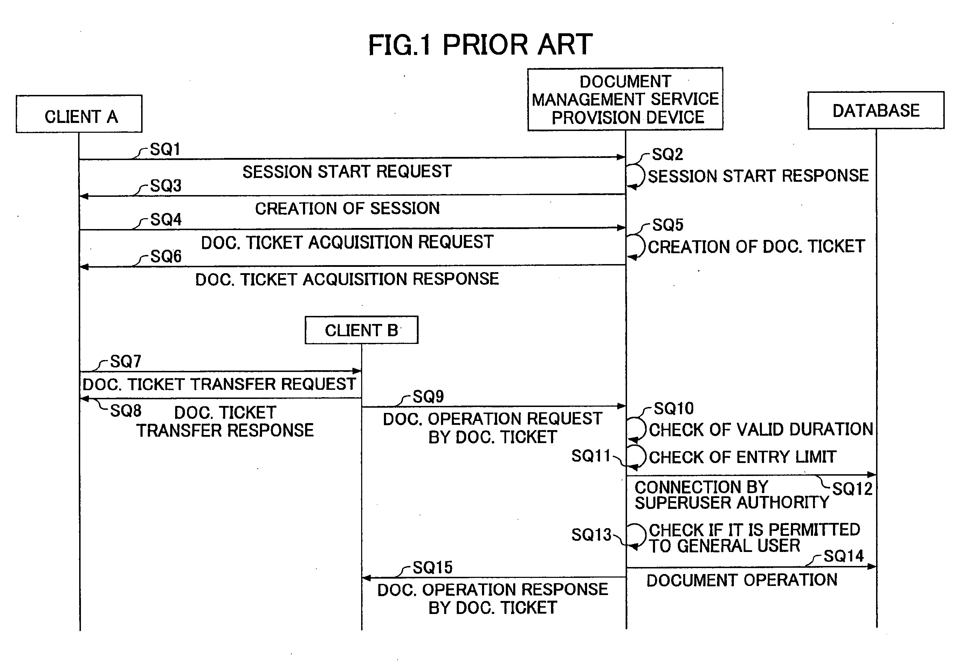

FIG. 1 shows the sequence of a conventional document operation processing.

In the processing of FIG. 1, client A creates a session start request of a session between the client A and a document-management service provision device, and transmits the session start request to the document-management service provision device (sequence SQ1).

The document-management service provision device receives the session start request from the client A, and performs authentication based on authentication information contained in the session start request, such as a user ID, a password, etc.

If it is determined that the authentication information is valid, the document-management service provision device creates a session (sequence SQ2), and creates a session start response including a session ID which identifies the, and transmits the session start response to the client A of the requesting source node (sequence SQ3).

When the session start response is received, the client A creates a document ticket acquisition request including the session ID contained in the session start response, and transmits the document ticket acquisition request to the document-management service provision device (sequence SQ4). For example, a document ticket of the document ticket acquisition request is the authentication information which proves permission of the use of a document managed in the document-management service provision device.

When the document ticket acquisition request is received, the document-management service provision device judges whether it is an effective request by making reference to a corresponding session based on the session ID contained in the received document ticket acquisition request.

If it is determined that the document ticket acquisition request is an effective request, the document-management service provision device creates a document ticket according to the document ticket acquisition request (sequence SQ5), and creates a document ticket acquisition response containing a document ticket ID which identifies the document ticket, and transmits the document ticket acquisition response to the client A (sequence SQ6).

The client A receives the document ticket acquisition response, and creates a document ticket transfer request (which means the transfer of the document ticket) including the document ticket ID contained in the document ticket acquisition response, and identification information which identifies the document-management service provision device (for example, a URL of the document-management service provision device), and transmits the document ticket transfer request to client B (sequence SQ7).

The client B receives the document ticket transfer request, and creates a document ticket transfer response corresponding to the document ticket transfer request, and transmits the document ticket transfer response to the client A (sequence SQ8).

Moreover, the client B creates a document-ticket-based document operation request containing the document ticket ID contained in the document ticket transfer request, and the document ID of the document of an operation target, and transmits the document-ticket-based document operation request to a corresponding document-management service provision device based on the identification information which identifies the document-management service provision device contained in the document ticket transfer request (sequence SQ9).

The document-management service provision device receives the document-ticket-based document operation request. And, by making reference to a corresponding document ticket based on the document ticket ID contained in the document-ticket-based document operation request, the document-management service provision device judges whether the entry limit contained in the corresponding document ticket is currently valid (sequence SQ10), and judges whether the valid duration contained in the corresponding document ticket is currently valid (sequence SQ11).

If it is determined that the document operation request is an effective request, the document-management service provision device establishes a connection to the database (DB) by using the superuser access right (sequence SQ12). And the document-management service provision device judges whether the document operation, requested by the document-ticket-based document operation request, is permitted for a general user to perform (sequence SQ13).

If it is determined that the requested document operation is permitted for the general user to perform, the document-management service provision device performs the requested document operation to the document stored in the database (DB) (sequence SQ14), and creates a document-ticket-based document operation response including the operation result of the document operation, and transmits the document-ticket-based document operation response to the client B of the requesting source node (sequence SQ15).

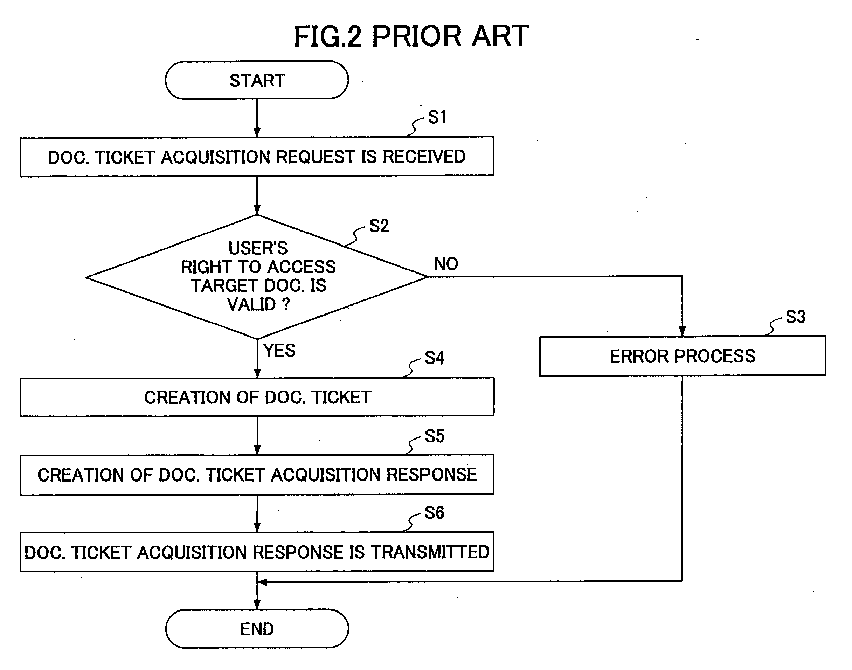

FIG. 2 is a flowchart for explaining a conventional document ticket creation processing.

In the processing of FIG. 2, at step S1, the document-management service provision device receives a document ticket acquisition request from the client (for example, the client A).

Progressing to step S2 following step S1, the document-management service provision device judges whether the user's right is effective to access a target document identified by the document ID, based on the document ID contained in the document ticket acquisition request.

If it is determined that the user's right to access the target document is effective (YES in step S2), the control of the document-management service provision device progresses to step S4. If it is determined that the user's right is not effective (NO in step S2), the control of the document-management service provision device progresses to step S3.

At step S3, the document-management service provision device performs an error processing in which a response containing an error message indicating that it is unable to create a document ticket because the user has no effective access right is created, and transmits the result of the error processing (the response containing the error message) to the client of the requesting source node.

On the other hand, at step S4, the document-management service provision device creates a document ticket according to the document ticket acquisition request.

Progressing to step S5 following step S4, the document-management service provision device creates a document ticket acquisition response containing the document ticket ID which identifies the document ticket created in step S4.

Progressing to step S6 following step S5, the document-management service provision device transmits the document ticket acquisition response created in step S5 to the client of the requesting source node. Then the processing of FIG. 2 is completed.

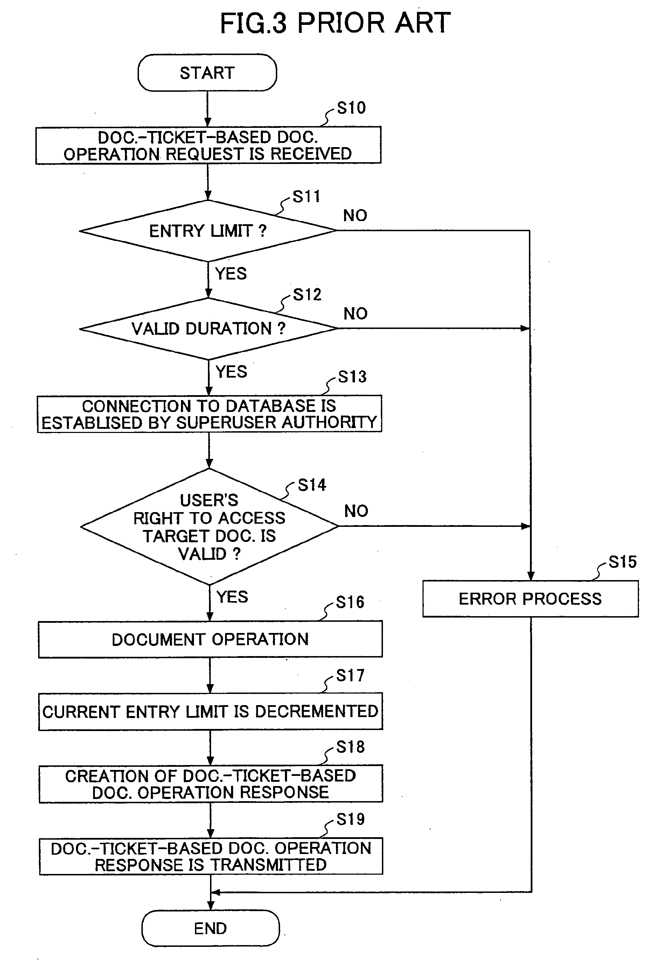

FIG. 3 is a flowchart for explaining a conventional document operation processing by a document ticket.

In the processing of FIG. 3, at step S10, the document-management service provision device receives a document-ticket-based document operation request from the client (for example, the client B).

Progressing to step S11 following step S10, the document-management service provision device judges whether the entry limit contained in the document ticket is currently valid by making reference to the corresponding document ticket based on the document ticket ID contained in the document-ticket-based document operation request.

If it is determined that the entry limit of the document ticket is currently valid (YES in step S11), the control of the document-management service provision device progresses to step S12. If it is determined that the entry limit of the document ticket is not currently valid (NO in step S11), the control of the document-management service provision device progresses to step S15.

At step S12, the document-management service provision device judges whether the valid duration contained in the document ticket is currently valid by making reference to the corresponding document ticket based on the document ticket ID contained in the document-ticket-based document operation request.

If it is determined that the valid duration of the document ticket is currently valid (YES in step S12), the control of the document-management service provision device progresses to step S13. If it is determined that the valid duration of the document ticket is currently valid (NO in step S12), the control of the document-management service provision device progresses to step S15.

At step S13, the document-management service provision device establishes the connection to the database by using the superuser access right.

Progressing to step S14 following step S13, the document-management service provision device judges whether the document operation to the target document requested by the document-ticket-based document operation request is permitted for the general user to perform.

If it is determined that the document operation is permitted for the general user to perform (YES in step S14), the control of the document-management service provision device progresses to step S16. If it is determined that the document operation is not permitted for the general user to perform (NO in step S14), the control of the document-management service provision device progresses to step S15.

At step S15, the document-management service provision device performs an error processing in which a response containing an error message indicating the cause of the error is created and transmitted to the client of the requesting source node.

On the other hand, at step S16, the document-management service provision device performs the document operation to the target document according to the document-ticket-based document operation request.

Progressing to step S17 following step S16, the document-management service provision device decrements the current entry limit contained in the document ticket, for example.

Progressing to step S18 following step S17, the document-management service provision device creates a document-ticket-based document operation response including the operation result of the target document.

Progressing to step S19 following step S18, the document-management service provision device transmits the document operation response created in step S18 to the client of the requesting source node.

Concerning the conventional document-management device, refer to Japanese Patent No. 3218017 and Japanese Laid-Open Patent Application No. 2004-252953 for example.

In the case of the conventional composition and method mentioned above, even when a network manager with suitable access right cancels the user's access right (client A) to the target document after the issuance of the document ticket (sequence SQ6 in the processing of FIG. 1), the document-management service provision device is provided to perform the sequences SQ12 and SQ13 in the processing of FIG. 1 or the steps S13 and S14 in the flowchart of FIG. 3. Namely, after the connection to the database (DB) is established by using the superuser access right, the document-management service provision device merely judges whether the requested document operation is permitted for the general user to perform. There is a problem in that the document-management service provision device is unable to reflect the change of the access right in the document operation.

Moreover, in the case of the conventional composition and conventional method, the document-management service provision device (or the document-management service) is provided to perform the authentication processing, such as the user authentication. There is a problem in that the internal control of the document-management service provision device (or the document-management service) becomes complicated.

### SUMMARY OF THE INVENTION

An object of the present invention is to provide an improved document management service and authentication service in which the above-mentioned problems are eliminated.

Another object of the present invention is to provide a document management service device which can be provided in a simplified composition and can effectively respond to a change of the access right to a document or folder.

Another object of the present invention is to provide an authentication service device which can be provided in a simplified composition and can effectively respond to a change of the access right to a document or folder.

In order to achieve the above-mentioned objects, the present invention provides a document management service device including a document-management service unit which provides a service concerning management of a document, the document-management service unit comprising: a certification-information acquisition request receiving unit receiving, from a client which requests acquisition of a certification information concerning the document or a document storing unit storing the document, a certification-information acquisition request containing information specifying an entry limit of the certification information and/or information specifying a valid duration of the certification information; a certification-information creation unit creating the certification information in response to the certification-information acquisition request; a certification-information transmission unit transmitting the certification information to the client; a document operation request receiving unit receiving, from either the requesting client or another client different from the requesting client, a document operation request concerning the document or the document storing unit, the document operation request containing the certification information; and a document operation execution unit performing a document operation to the document by using an access right of a user of the certification information, in response to the document operation request.

According to the present invention, the document-management service device can be provided in a simplified composition and can effectively respond to a change of the access right to a document or folder.

In order to achieve the above-mentioned objects, the present invention provides an authentication service device including an authentication service unit which provides a service concerning authentication, the authentication service unit comprising: a re-authentication request receiving unit receiving a re-authentication request from a document-management service unit, the re-authentication request containing an authentication information of a user from a document-management service unit, the document-management service unit providing a service concerning management of a document; a user information acquisition unit acquiring a corresponding user information in response to the re-authentication request; and a re-authentication response transmitting unit transmitting a re-authentication response to the document-management service, the re-authentication response containing the user information acquired by the user information acquisition unit.

According to the present invention, the authentication service device can be provided in a simplified composition and can effectively respond to a change of the access right to a document or folder.

Moreover, in order to achieve the above-mentioned objects, the present invention may be implemented as a document-management service program, an authentication service program, a recording medium, a document-management service method, or an authentication service method.

The document-management service unit in the claims corresponds to, for example, a document-management service unit 10 which will be described later. The authentication service unit in the claims corresponds to, for example, an authentication service unit 20 which will be described later.

The certification-information acquisition request receiving unit in the claims corresponds to, for example, a document ticket acquisition request receiving unit 109 which will be described later. The certification-information creation unit in the claims corresponds to, for example, a document ticket creation unit 113 which will be described later. The certification-information transmission unit in the claims corresponds to, for example, a document ticket acquisition response transmission unit 118 which will be described later. The document operation request receiving unit in the claims corresponds to, for example, a document-ticket-based document operation request receiving unit 119 which will be described later. The operation execution unit given in the claims corresponds to, for example, a document operation unit 125 which will be described later.

The certification-information management unit in the claims corresponds to, for example, a document ticket management unit 114 which will be described later.

The copy request transmitting unit in the claims corresponds to, for example, an authentication ticket copy request transmission unit 111 which will be described later.

The copy response receiving unit in the claims corresponds to, for example, an authentication ticket copy response receiving unit 112 which will be described later.

The re-authentication request transmitting unit in the claims corresponds to, for example, a re-authentication request transmission unit 123 which will be described later.

The copy request receiving unit in the claims corresponds to, for example, an authentication ticket copy request receiving unit 213 which will be described later.

The copy unit in the claims corresponds to, for example a persistent authentication ticket creation unit 216 or a self-contained authentication ticket creation unit 218 which will be described later.

The copy response transmitting unit in the claims corresponds to, for example, an authentication ticket copy response transmission unit 221 which will be described later.

The authentication-information management unit in the claims corresponds to, for example, a default authentication ticket management unit 204 which will be described later.

The copied authentication-information management unit in the claims corresponds to, for example, a persistent authentication ticket management unit 217 which will be described later.

The re-authentication request receiving unit in the claims corresponds to, for example, a re-authentication request receiving unit 222 which will be described later.

The user information acquisition unit in the claims corresponds to, for example, a user information acquisition unit 210 which will be described later.

The re-authentication response transmitting unit in the claims corresponds to, for example, a re-authentication response transmission unit 225 which will be described later.

According to the present invention, the document-management service device and the authentication service device can be provided in a simplified composition and can effectively respond to a change of the access right to a document or folder.

### BRIEF DESCRIPTION OF THE DRAWINGS

Other objects, features and advantages of the present invention will be apparent from the following detailed description when reading in conjunction with the accompanying drawings.
FIG. 1 is a diagram for explaining the sequence of a conventional document operation processing.
FIG. 2 is a flowchart for explaining a conventional document ticket creation processing.
FIG. 3 is a flowchart for explaining a conventional document operation processing by a document ticket.
FIG. 4 is a block diagram of the hardware composition of a document-management service device in an embodiment of the invention.
FIG. 5 is a block diagram of the hardware composition of an authentication service device in an embodiment of the invention.
FIG. 6 is a block diagram of the functional composition of a document-management service unit.
FIG. 7 is a block diagram of the functional composition of an authentication service unit.
FIG. 8 is a sequence diagram for explaining an example of the session creation processing of client A and document-management service using the authentication service.
FIG. 9 is a diagram showing an example of the session of the client and the document-management service.
FIG. 10 is a sequence diagram for explaining an example of the document ticket creation processing using the authentication service.
FIG. 11 is a diagram showing an example of a document ticket acquisition request.
FIG. 12 is a diagram showing an example of a document ticket.
FIG. 13 is a flowchart for explaining an example of the authentication ticket creation processing of authentication ticket-B in the authentication service.
FIG. 14 is a flowchart for explaining an example of the document ticket creation processing using the authentication service in the document-management service.
FIG. 15 is a sequence diagram for explaining an example of the document operation processing using the authentication service.
FIG. 16 is a flowchart for explaining an example of the document operation processing using the authentication service in the document-management service.
FIG. 17 is a diagram showing an example of the class of document ticket.
FIG. 18 is a diagram showing an example in which the valid duration of a document ticket is specified.
FIG. 19 is a diagram showing an example in which the entry limit of a document ticket is specified.
FIG. 20 is a diagram showing an example of the class of folder ticket.
FIG. 21 is a diagram showing an example in which the valid duration of a folder ticket is specified.
FIG. 22 is a diagram showing an example in which the entry limit of a folder ticket is specified.
FIG. 23 is a sequence diagram for explaining an example of the processing concerning a default authentication ticket.
FIG. 24 is a diagram showing an example in which a default authentication ticket is stored in a ticket pool and managed with the ticket pool.
FIG. 25 is a sequence diagram for explaining the processing concerning a persistent authentication ticket.
FIG. 26 is a diagram showing an example in which a persistent authentication ticket is stored and managed as a file on HDD with the ticket pool on RAM.
FIG. 27 is a sequence diagram for explaining the processing concerning a persistent authentication ticket.
FIG. 28 is a sequence diagram for explaining the processing concerning a self-contained authentication ticket.
FIG. 29 is a diagram showing an example in which a self-contained authentication ticket is encoded and a self-contained authentication ticket ID is set.
FIG. 30 is a sequence diagram for explaining the processing concerning a self-contained authentication ticket.
FIG. 31 is a diagram for explaining an example in which a self-contained authentication ticket ID is decoded.
FIG. 32 is a diagram for explaining the processing concerning a temporary single reading document ticket.
FIG. 33 is a diagram for explaining the processing concerning the temporary single reading document ticket.
FIG. 34 is a diagram for explaining the processing concerning the temporary single reading document ticket.
FIG. 35 is a diagram for explaining the processing concerning a permanent multiple reading document ticket.

### DETAILED DESCRIPTION OF PREFERRED EMBODIMENTS

A description will now be given of the embodiments of the invention with reference to the accompanying drawings.

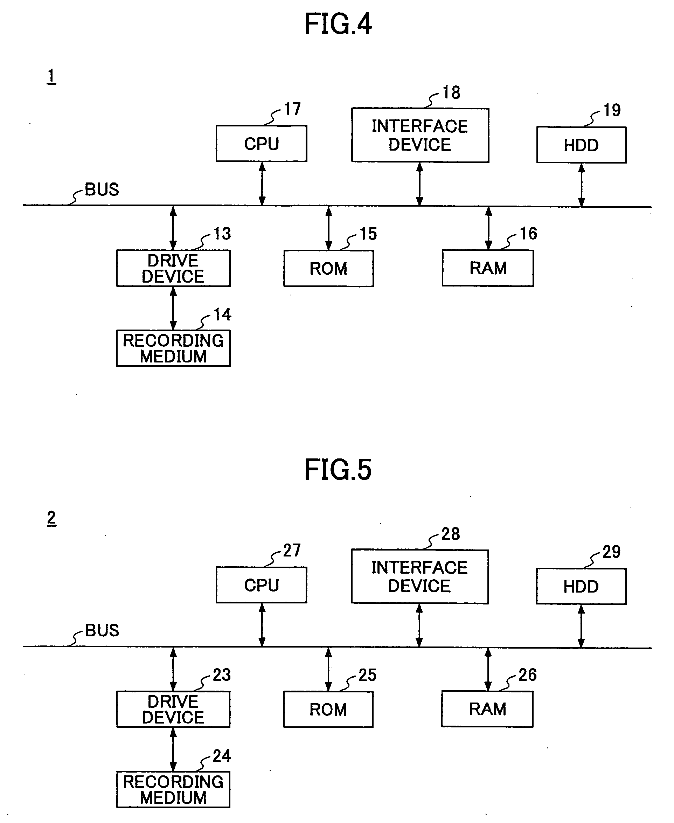

FIG. 4 is a block diagram of the hardware composition of a document-management service device in an embodiment of the invention. In FIG. 4, only the composition which is required for the following description is illustrated and the composition which is not required for the following description is omitted. Also in the subsequent figures, the manner the composition is illustrated is the same as that of FIG. 4.

As shown in FIG. 4, the document-management service device 1 comprises a drive device 13, a ROM (Read Only Memory) 15, a RAM (Random Access Memory) 16, a CPU (Central Processing Unit) 17, an interface device 18, and a HDD (Hard Disk Drive) 19 which are interconnected by the bus.

The interface device 18 provides the interface for connecting the document-management service device 1 to a network.

The program (or a document-management service program) corresponding to a document-management service unit 10 which will be described later may be loaded to the document-management service device 1 by using a recording medium 14, such as a CD-ROM. Alternatively, the program may be downloaded to the document-management service device 1 through the network.

The recording medium 14 is set in the drive device 13, and the data and the document-management service program from the recording medium 14 are installed into the HDD 19 through the drive device 13.

The ROM 15 stores the data or the like. The RAM 16 stores the document-management service program read from the HDD 19 upon starting of the document-management service device 1. The CPU 17 performs the processing according to the document-management service program stored in the RAM 16.

The HDD 19 stores the document-management service program and the documents managed by using the database. In the HDD 19, folders or directories are provided, and the documents, the document-management service program, etc. are stored in the folders or directories.

Next, an example of the hardware composition of an authentication service device 2 will be described with reference to FIG. 5. FIG. 5 is a block diagram of the hardware composition of an authentication service device in an embodiment of the invention.

As shown in FIG. 5, the authentication service device 2 comprises a drive device 23, a ROM 25, a RAM 26, a CPU 27, an interface device 28, and a HDD 29 which are interconnected by the bus.

The interface device 28 provides the interface for connecting the authentication service device 2 to the network.

The program (or an authentication service program) corresponding to the authentication service unit 20 which will be described later may be loaded to the authentication service device 2 by using a recording medium 24, such as a CD-ROM. Alternatively, the program may be downloaded to the authentication service device 2 through the network.

The recording medium 24 is set in the drive device 23, and the data and the authentication service program from the recording medium 24 are installed into the HDD 29 through the drive device 23.

The ROM 25 stores the data or the like. The RAM 26 stores the authentication service program read from the HDD 29 upon starting of the authentication service device 2.

The CPU 27 performs the processing according to the authentication service program stored in the RAM 26.

The HDD 29 stores a default authentication ticket, a persistent authentication ticket, an authentication service program, etc, which will be described later.

In the composition of FIG. 4 and FIG. 5, the document-management service unit 10 (or the document-management service program) is installed in the document-management service device 1, and the authentication service unit 20 (or the authentication service program) is installed in the authentication service device 2. Alternatively, the document-management service unit 10 (or the document-management service program) and the authentication service unit 20 (or the authentication service program) may be installed in the same device.

The document-management service unit 10, the authentication service unit 20, and the client service unit installed in the client are provided as Web services and mutually exchange the messages based on the SOAP (Simple Object Access Protocol).

In the following, for the sake of simplification of description, the client service will be referred to as a client, or client A, client B, etc. In the accompanying drawings, the document-management service unit 10 may be referred to as a repository.

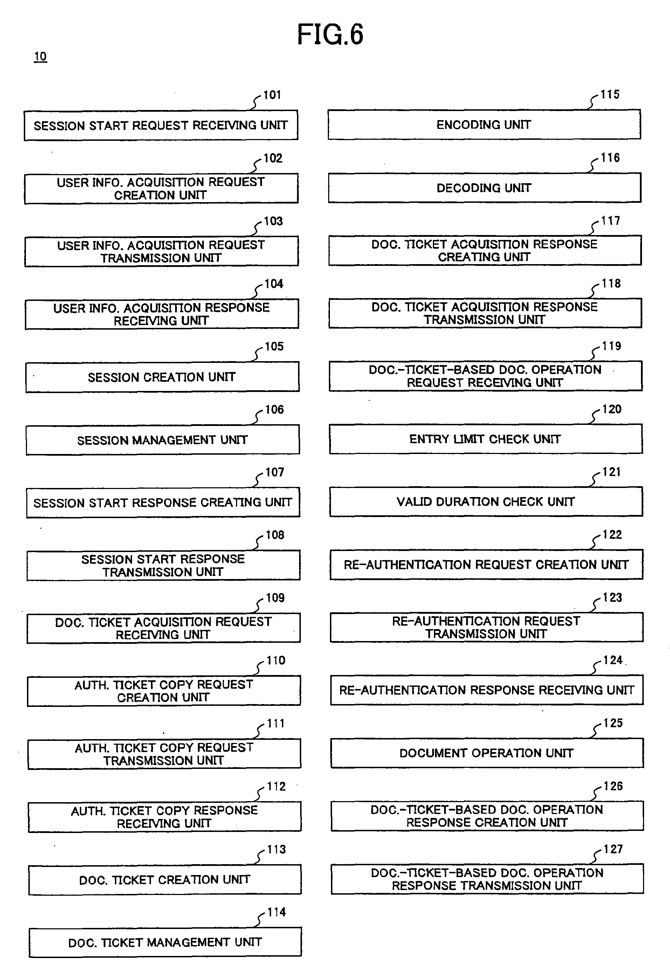

Next, the functional composition of the document-management service unit 10 will be described with reference to FIG. 6. FIG. 6 is a block diagram of the functional composition of the document-management service unit in an embodiment of the invention.

Unless otherwise specified in the following, implementation of the invention will be explained using a document ticket which is the authentication information proving use permission of a document, for the sake of simplification of explanation. In the composition or the processing of the invention when a folder ticket which is the authentication information proving use permission of a folder of the document-management service device 1 is used, the term "document ticket" may be replaced by the term "folder ticket", and the term "document" may be replaced by the term "folder", unless otherwise specified.

As shown in FIG. 6, the document-management service unit 10 comprises session start request receiving unit 101, user information acquisition request creation unit 102, user information acquisition request transmission unit 103, user information acquisition response receiving unit 104, session creation unit 105, session management unit 106, session start response creating unit 107, session start response transmission unit 108, document ticket acquisition request receiving unit 109, authentication ticket copy request creation unit 110, authentication ticket copy request transmission unit 111, authentication ticket copy response receiving unit 112, document ticket creation unit 113, document ticket management unit 114, encoding unit 115, decoding unit 116, document ticket acquisition response creating unit 117, document ticket acquisition response transmission unit 118, document-ticket-based document operation request receiving unit 119, entry limit check unit 120, valid duration check unit 121, re-authentication request creation unit 122, re-authentication request transmission unit 123, re-authentication response receiving unit 124, document operation unit 125, document-ticket-based document operation response creation unit 126, and document-ticket-based document operation response transmission unit 127.

The session start request receiving unit 101 receives, from the client (for example, the client A), a session start request containing an authentication ticket-A ID (or a default authentication ticket ID which will be described later) which is an identifier which identifies the authentication ticket of the user of the client.

The user information acquisition request creation unit 102 creates a user information acquisition request containing the corresponding authentication ticket-A ID, in response to the session start request.

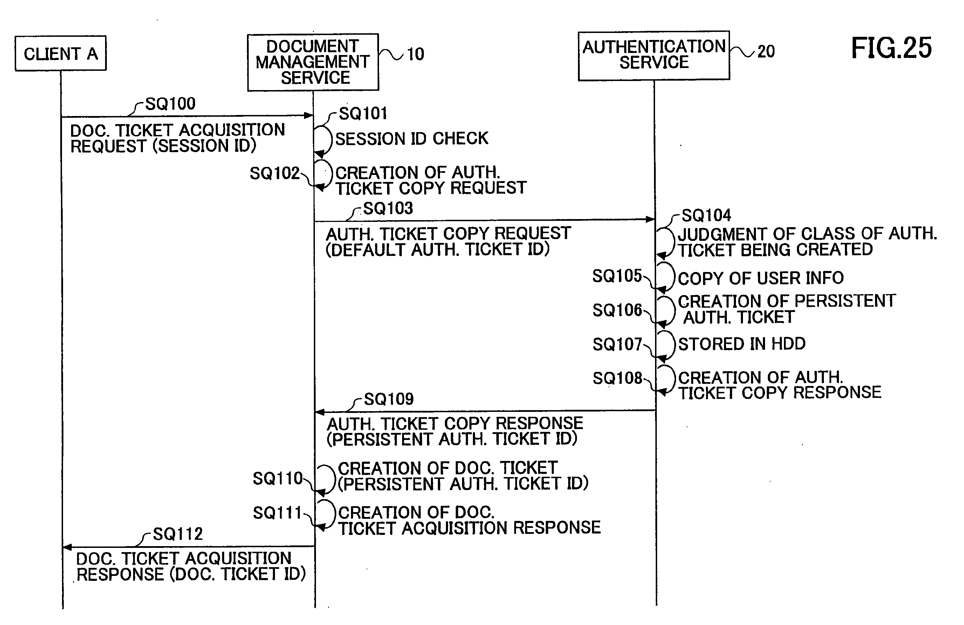

The user information in this case includes, as indicated in FIG. 25, the information on the group (for example, group name or group ID) which the user belongs to, together with the user information (for example, user name or user ID).

The user information acquisition request transmission unit 103 transmits the user information acquisition request which is created by the user information acquisition request creation unit 102, to the corresponding authentication service unit 20.

The user information acquisition response receiving unit 104 receives a user information acquisition response including user information, in response to the user information acquisition request, from the authentication service unit 20.

The session creation unit 105 creates the session of the client (the requesting source node) and the document-management service unit 10 according to the user information included in the user information acquisition response received by the user information acquisition response receiving unit 104.

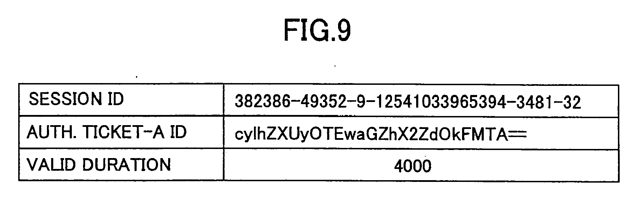

For example, the session creation unit 105 creates the session containing the authentication ticket-A ID according to the user information as shown in FIG. 9 which will be described later.

The session management unit 106 stores the session, which is created by the session creation unit 105, into the RAM 16 and the HDD 19, and manages the stored session.

The session start response creating unit 107 creates a session start response in accordance with the session start request. For example, the session start response creating unit 107 creates the session start response containing a session ID which identifies the session which is created by the session creation unit 105.

The session start response transmission unit 108 transmits the session start response which is created by the session start response creating unit 107, to the client of the requesting source node.

The document ticket acquisition request receiving unit 109 receives, from the client (for example, the client A), a document ticket acquisition request including the session ID at least one document ID (or folder ID in the case of a folder ticket acquisition request), the information which specifies the valid duration, the information which specifies the entry limit, and the information which specifies the access right (for example, read access right, read/write access right, etc.) of the document ticket.

The authentication ticket copy request creation unit 110 creates an authentication ticket copy request containing the authentication ticket-A ID. For example, the authentication ticket copy request creation unit 110 acquires the authentication ticket-A ID contained in the corresponding session from the session management unit 106 based on the session ID contained in the document ticket acquisition request, and creates the authentication ticket copy request containing the authentication ticket-A ID.

The authentication ticket copy request transmission unit 111 transmits the authentication ticket copy request which created by the authentication ticket copy request creation unit 110, to the corresponding authentication service unit 20.

The authentication ticket copy response receiving unit 112 receives an authentication ticket copy response corresponding to the authentication ticket copy request, from the authentication service unit 20. The authentication ticket copy response received in this case contains an authentication ticket-B ID, which identifies an authentication ticket-B (or a persistent authentication ticket or self-contained authentication ticket which will be described later) in which the user information of an authentication ticket-A (or a default authentication ticket which will be described later) identified by the authentication ticket-A ID is copied, or the encoded authentication ticket-B.

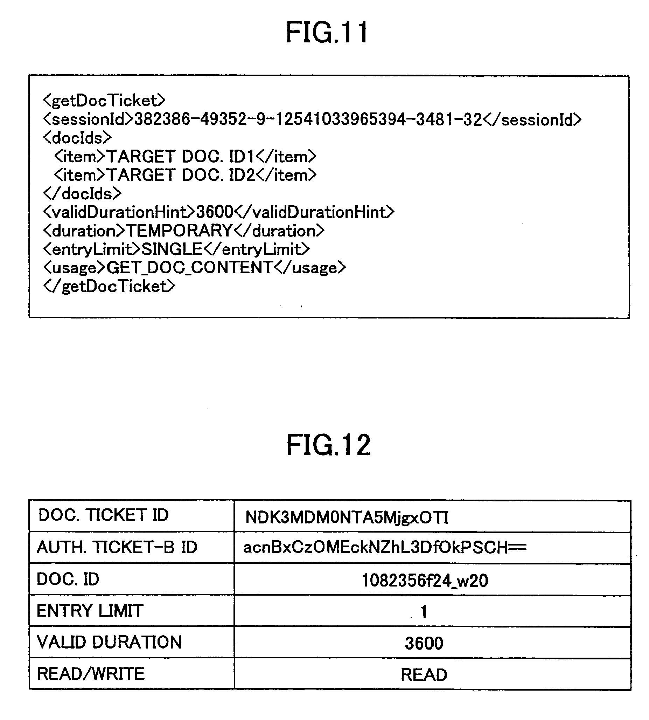

The document ticket creation unit 113 creates a document ticket in accordance with the authentication result included in the authentication ticket copy response which is received by the authentication ticket copy response receiving unit 112. For example, the document ticket creation unit 113 creates a document ticket which includes: an authentication ticket-B contained in the authentication ticket copy response received by the authentication ticket copy response receiving unit 112 or the encoded authentication ticket-B; the valid duration and the entry limit based on the information which specifies the valid duration and the information which specifies the entry limit contained in the document ticket acquisition request; at least one document ID contained in the document ticket acquisition request; and the information concerning the contents of operation which is permitted by the document ticket based on the information which specifies the access right of the document ticket and is contained in the document ticket acquisition request, as shown in FIG. 12 which will be which will be described later.

The document ticket management unit 114 stores the document ticket which is created by the document ticket creation unit 113, in the ticket pool on the RAM 16 and/or the disk file on HDD 19, and manages the stored document ticket.

The document ticket management unit 114 stores a temporary single reading document ticket, a temporary single writing document ticket, a temporary multiple reading document ticket, a temporary multiple writing document ticket, a permanent single reading document ticket, and a permanent single writing document ticket, which will be described later, in the ticket pool on the RAM 16 and/or the disk file on HDD 19, and manages the stored document tickets.

The encoding unit 115 encodes the document ticket in accordance with the request. For example, the encoding unit 115 encodes the permanent multiple reading document ticket or the permanent multiple writing document ticket which will be described later.

The decoding unit 116 decodes the encoded document ticket in accordance with the request. For example, the decoding unit 116 decodes the encoded permanent multiple reading document ticket or the encoded permanent multiple writing document ticket which will be described later.

The document ticket acquisition response creating unit 117 creates a document ticket acquisition response corresponding to the document ticket acquisition request. For example, the document ticket acquisition response creating unit 117 creates a document ticket acquisition response containing the document ticket ID which identifies the document ticket created by the document ticket creation unit 113, or creates a document ticket acquisition response containing the document ticket which is created by the document ticket creation unit 113 and encoded by the encoding unit 115.

The document ticket acquisition response transmission unit 118 transmits the document ticket acquisition response which is created by the document ticket acquisition response creating unit 117, to the client of the requesting source node.

The document-ticket-based document operation request receiving unit 119 receives a document-ticket-based document operation request containing the document ticket ID or the encoded document ticket, from the client (for example, the client B).

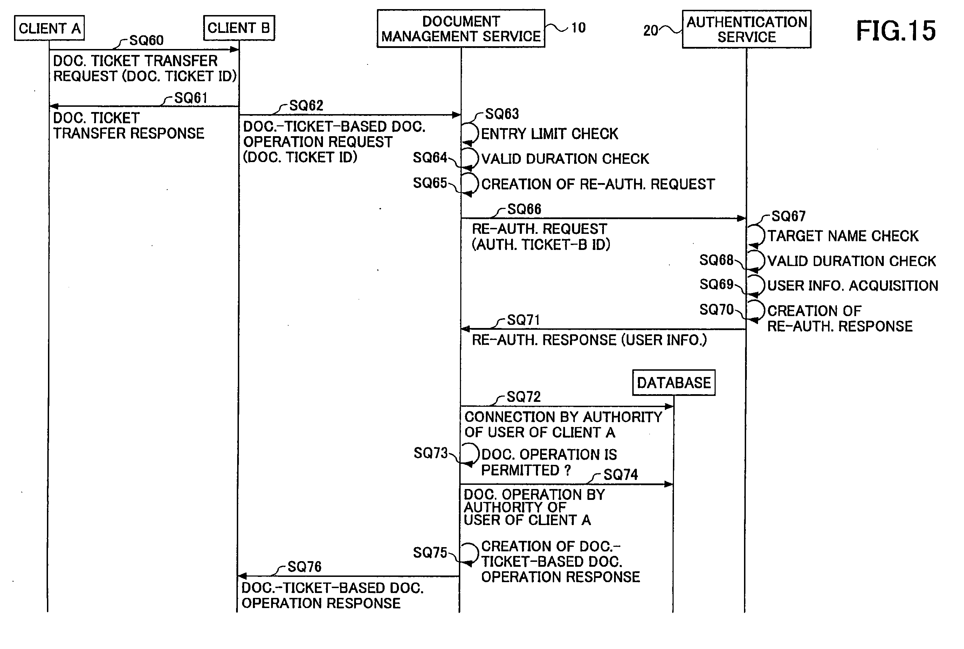

In one embodiment of the invention, as shown in FIG. 15 which will be described later, the client B transmits the document operation request containing the document ticket ID or the encoded document ticket, to the document-management service unit 10 by using the document ticket ID or the encoded document ticket transferred from the client A. Alternatively, the above-mentioned embodiment may be configured so that the client B first creates a session with the document-management service unit 10 using the document ticket ID or the encoded document ticket, and transmits, using the session ID which identifies the session, the operation request of a document or a folder to the document-management service unit 10.

However, for the sake of simplification of explanation, in the following description, it is assumed that the client B transmits, using the document ticket ID or the encoded document ticket transferred from the client A, the document operation request containing the document ticket ID, to the document-management service unit 10.

The entry limit check unit 120 judges whether the entry limit of a document ticket is currently valid, by making reference to the corresponding document ticket in response to the document-ticket-based document operation request.

The valid duration check unit 121 judges whether the valid duration of a document ticket is currently valid with respect to the present time, by making reference to a corresponding document ticket in response to the document-ticket-based document operation request.

The re-authentication request creation unit 122 creates a re-authentication request containing the authentication ticket-B ID contained in the corresponding document ticket, or the encoded authentication ticket, in response to the document-ticket-based document operation request.

The re-authentication request transmission unit 123 transmits the re-authentication request which is created by the re-authentication request creation unit 122, to the corresponding authentication service unit 20.

The re-authentication response receiving unit 124 receives a re-authentication response including the user information acquired from the authentication service unit 20, in response to the re-authentication request.

The document operation unit 125 accesses the database by using the access right of the user concerning the user information, based on the re-acquired user information included in the re-authentication response. And the document operation unit 125 performs the document operation (for example, reading of a document, writing of a document, deletion of a document, etc.) to the document which is specified in the document-ticket-based document operation request. The document operation which is performed in the case of a folder ticket unit, for example, the reading of the document stored in the folder, the writing to the document stored in the folder, the deletion of the document stored in the folder, the writing (preservation) of the document to a folder, the deletion of a folder, etc.

The document-ticket-based document operation response creation unit 126 creates a document-ticket-based document operation response including the operation result of the document operation.

The document-ticket-based document operation response transmission unit 127 transmits the document-ticket-based document operation response created by the document-ticket-based document operation response creation unit 126, to the client of the requesting source node.

In the example of FIG. 6, the request or the response including the session ID is transmitted or received between the document-management service unit 10, the client (client A or client B), and the authentication service unit 20. Alternatively, the above example may be configured so that the session itself is encoded, and a request or a response including the encoded session is transmitted or receives. This is the same for the corresponding one in the following description.

Moreover, the above example may be configured so that the client A operates a document or stores the document in the specified folder by using the document ticket ID or the encoded document ticket.

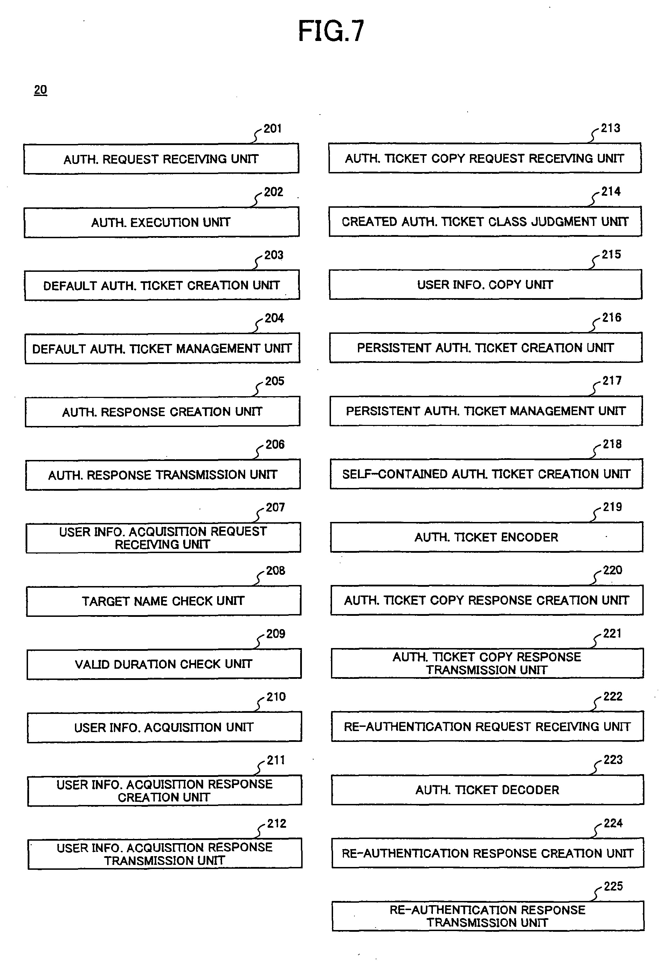

Next, the functional composition of the authentication service unit 20 will be described with reference to FIG. 7. FIG. 7 shows the functional composition of the authentication service.

As shown in FIG. 7, the authentication service unit 20 comprises authentication request receiving unit 201, authentication execution unit 202, default authentication ticket creation unit 203, default authentication ticket management unit 204, authentication response creating unit 205, authentication response transmission unit 206, user information acquisition request receiving unit 207, target name check unit 208, valid duration check unit 209, user information acquisition unit 210, user information acquisition response creating unit 211, user information acquisition response transmission unit 212, authentication ticket copy request receiving unit 213, created authentication ticket class judgment unit 214, user information copy unit 215, persistent authentication ticket creation unit 216, persistent authentication ticket management unit 217, self-contained authentication ticket creation unit 218, authentication ticket encoder 219, authentication ticket copy response creating unit 220, authentication ticket copy response transmission unit 221, re-authentication request receiving unit 222, authentication ticket decoder 223, re-authentication response creating unit 224, and re-authentication response transmission unit 225.

The authentication request receiving unit 201 receives an authentication request containing the authentication information of user ID, password, etc., from the client (for example, the client A).

The authentication execution unit 202 performs authentication based on the authentication information included in the authentication request.

The default authentication ticket creation unit 203 creates a default authentication ticket (or the authentication ticket-A) which will be described later, in response to the authentication result of the authentication execution unit 202.

The default authentication ticket management unit 204 stores the default authentication ticket created by the default authentication ticket creation unit 203, in the ticket pool on the RAM 26, and manages the stored default authentication ticket.

The authentication response creating unit 205 creates an authentication response in response to the authentication request. For example, the authentication response creating unit 205 creates an authentication response containing the authentication result, and the default authentication ticket ID (or the authentication ticket-A ID) which identifies the default authentication ticket.

The authentication response transmission unit 206 transmits the authentication response created by the authentication response creating unit 205, to the client of the requesting source node.

The user information acquisition request receiving unit 207 receives the user information acquisition request containing the default authentication ticket ID (or the authentication ticket-A ID) from the document-management service unit 10.

The target name check unit 208 makes reference to the authentication ticket (for example, the authentication ticket-A or authentication ticket-B) in response to the request, and judges whether the target name included in the authentication ticket is the same as the service name of the requesting source node (the document-management service unit 10 in this embodiment) which has transmitted the user information acquisition request or the re-authentication request.

The valid duration check unit 209 judges whether the valid duration of an authentication ticket is valid with respect to the present time by making reference to the corresponding authentication ticket (for example, the authentication ticket-A or the authentication ticket-B) in response to the request.

The user information acquisition unit 210 acquires the user information included in the corresponding authentication ticket (for example, the authentication ticket-A or the authentication ticket-B), based on the authentication ticket ID, or acquires a corresponding user information from a user management database.

The user information acquisition response creating unit 211 creates a user information acquisition response including the user information acquired by the user information acquisition unit 210.

The user information acquisition response transmission unit 212 transmits the user information acquisition response created by the user information acquisition response creating unit 211, to the document-management service unit 10 of the requesting source node.

The authentication ticket copy request receiving unit 213 receives, from the document-management service unit 10, the authentication ticket copy request including the default authentication ticket ID (authentication ticket-A ID), the information which specifies the valid duration, and the information which specifies the entry limit.

The created authentication ticket class judgment unit 214 judges the class of the authentication ticket being created, based on the information which specifies the valid duration contained in the authentication ticket copy request received by the authentication ticket copy request receiving unit 213, and/or the information which specifies the entry limit contained therein.

The user information copy unit 215 copies the user information of the corresponding default authentication ticket managed by the default authentication ticket management unit 204, based on the default authentication ticket ID contained in the authentication ticket copy request received by the authentication ticket copy request receiving unit 213.

In response to the judgment result of the created authentication ticket class judgment unit 214, the persistent authentication ticket creation unit 216 creates a persistent authentication ticket (or the authentication ticket-B) containing the user information copied by the user information copy unit 215, and containing the valid duration and/or the entry limit based on the information which specifies the valid duration and/or the information which specifies the entry limit, both contained in the authentication ticket copy request received by the authentication ticket copy request receiving unit 213.

The persistent authentication ticket management unit 217 stores the persistent authentication ticket created by the persistent authentication ticket creation unit 216, in the ticket pool on the RAM 26 or the disk file on the HDD 29, and manages the stored persistent authentication ticket.

The self-contained authentication ticket creation unit 218 creates a self-contained authentication ticket (or the authentication ticket-B) containing the user information copied by the user information copy unit 215, in response to the judgment result of the created authentication ticket class judgment unit 214.

The authentication ticket encoder 219 encodes the authentication ticket (for example, the self-contained authentication ticket).

The authentication ticket copy response creating unit 220 creates an authentication ticket copy response corresponding to the authentication ticket copy request. For example, the authentication ticket copy response creation unit 220 creates an authentication ticket copy response containing the persistent authentication ticket ID (or the authentication ticket-B ID) which identifies the persistent authentication ticket, or containing the encoded self-contained authentication ticket (or the encoded authentication ticket-B).

The authentication ticket copy response transmission unit 221 transmits the authentication ticket copy response created by the authentication ticket copy response creating unit 220, to the document-management service unit 10 of the requesting source node.

The re-authentication request receiving unit 222 receives the re-authentication request containing the persistent authentication ticket ID (or the authentication ticket-B ID) or the encoded self-contained authentication ticket (or the encoded authentication ticket-B), from the document-management service unit 10.

The authentication ticket decoder 223 decodes the encoded authentication ticket (for example, the encoded self-contained authentication ticket) in response to the request.

The re-authentication response creating unit 224 creates a re-authentication response corresponding to the re-authentication request. For example, the re-authentication response creating unit 224 creates a re-authentication response containing the checked result (re-authentication result) of the target name check unit 208 and/or the valid duration check unit 209, and/or containing the user information acquired by the user information acquisition unit 210.

The re-authentication response transmission unit 225 transmits the re-authentication response created by the re-authentication response creating unit 224, to the document-management service unit 10 of the requesting source node.

As shown in FIG. 6 and FIG. 7, the internal control (or internal functions) of the document-management service unit 10 can be provided in a simplified composition, by dividing the document-management service functions into the functions concerning document management and the functions concerning authentication.

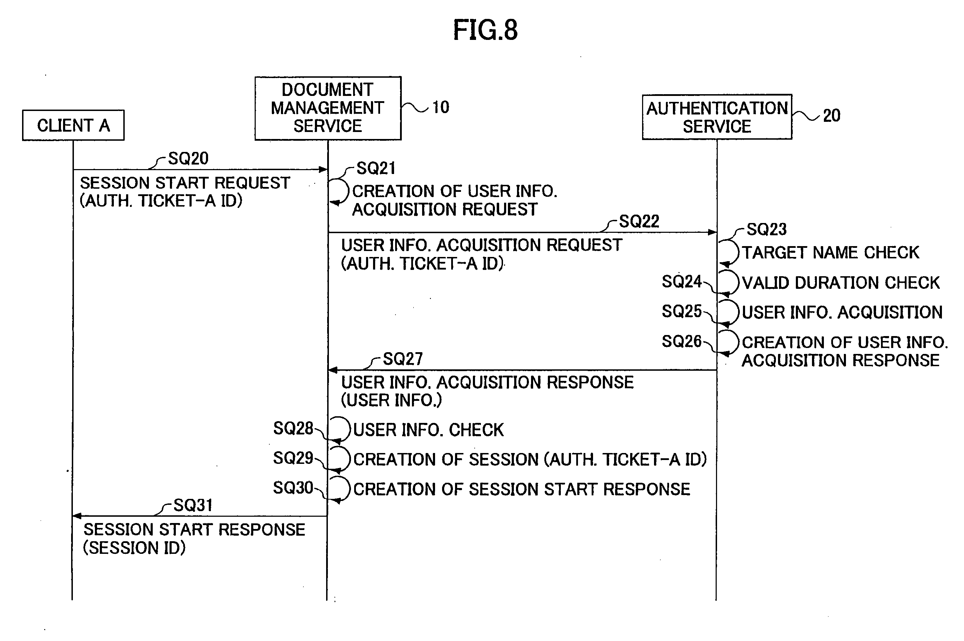

Next, an example of the session creation processing of client A and document-management service unit 10 using the authentication service unit 20 will be described with reference to FIG. 8. FIG. 8 is a sequence diagram for explaining the session creation processing of the client A and the document-management service using the authentication service.

In the processing of FIG. 8, it is assumed that the client A has already acquired an authentication ticket-A ID from the authentication service unit 20.

The client A creates a session start request including the authentication ticket-A ID, the information which specifies the valid duration of the session, and transmits the session start request to the document-management service unit 10 (sequence SQ20).

The document-management service unit 10 receives the session start request, and creates a user information acquisition request containing the authentication ticket-A ID based on the authentication ticket-A ID contained in the session start request (sequence SQ21), and transmits the user information acquisition request to the authentication service unit 20 (sequence SQ22).

When the user information acquisition request is received, the authentication service unit 20 makes reference to the authentication ticket-A corresponding to the authentication ticket-A ID contained in the user information acquisition request, and judges whether the target name included in the authentication ticket-A is the same as the service name of the requesting source node (the document-management service unit 10 in this embodiment) which has transmitted the user information acquisition request (sequence SQ23).

If it is determined that the target name and the service name are the same, the authentication service unit 20 makes reference to the authentication ticket-A corresponding to the authentication ticket-A ID contained in the user information acquisition request, and judges whether the valid duration contained in the authentication ticket-A is currently valid with respect to the present time (sequence SQ24).

If it is determined that the valid duration contained in the authentication ticket-A is currently valid, the authentication service unit 20 acquires the user information from the authentication ticket-A corresponding to the authentication ticket-A ID contained in the user information acquisition request (sequence SQ25).

The processing order of the check of the target name performed at sequence SQ23 and the check of the valid duration performed at sequence SQ24 may be reversed.

When the user information is acquired, the authentication service unit 20 creates a user information acquisition response containing the user information (sequence SQ26), and transmits the user information acquisition response to the document-management service unit 10 of the requesting source node (sequence SQ27).

When the user information acquisition response is received, the document-management service unit 10 checks the user information included in the user information acquisition response, and judges whether the user (or the client) is permitted to start the session (sequence SQ28).

If it is determined that the user (or the client) is permitted to start the session, the document-management service unit 10 creates the session of the document-management service unit 10 and the client of the requesting source node containing the authentication ticket-A ID (sequence SQ29), and stores the created session in the RAM 16 and/or the HDD 19, and manages the stored session. An example of the session is shown in FIG. 9 which will be described later.

The document-management service unit 10 creates a session start response containing the session ID which identifies the created session (sequence SQ30), and transmits the session start response to the client of the requesting source node (or the client A in the example of FIG. 8) (sequence SQ31).

Next, an example of the session of the client and the document-management service unit 10 will be described with reference to FIG. 9. FIG. 9 shows an example of the session of the client and the document-management service.

As shown in FIG. 9, the session includes, for example, the session ID, the authentication ticket-A ID, and the valid duration of the session. In the example of FIG. 9, the valid duration of the session is expressed in the number of seconds that indicates an effective duration after the time the session is created.

In the example of FIG. 9, the session contains the authentication ticket-A ID. However, it is not necessary for the session to contain the authentication ticket-A ID, and what is necessary for the document-management service unit 10 in this embodiment is to allow the management of the session and the authentication ticket-A ID by associating the session and the authentication ticket-A ID.

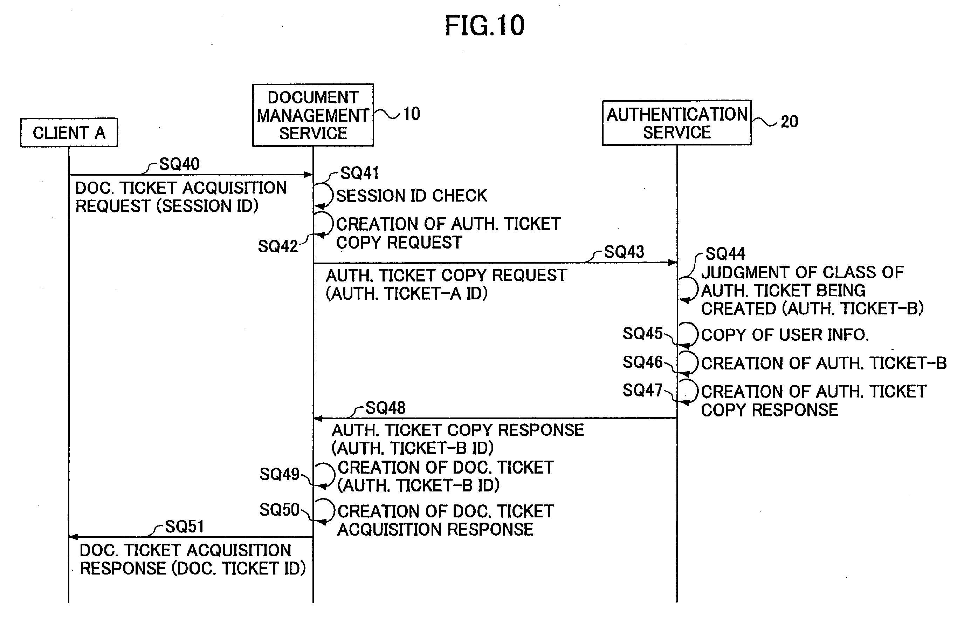

Next, the sequence of the document ticket creation processing which is performed using the authentication service unit 20 will be described with reference to FIG. 10. FIG. 10 is a sequence diagram for explaining an example of the document ticket creation processing using the authentication service.

In the processing of FIG. 10, the client A creates a document ticket acquisition request containing the session ID, at least one document ID (at least one folder ID in the case of a folder ticket acquisition request), the information which specifies the valid duration, the information which specifies the entry limit, and the information which specifies the access right of the document ticket. An example of the document ticket acquisition request is shown in FIG. 11. And the client A transmits the document ticket acquisition request to the document-management service unit 10 (sequence SQ40).

When the document ticket acquisition request is received, the document-management service unit 10 searches and refers to a corresponding session based on the session ID contained in the document ticket acquisition request, and determines whether the corresponding session exists effectively (sequence SQ41). For example, the document-management service unit 10 determines that the session exists effectively, if the session corresponding to the session ID exists and the present time is within the valid duration of the session.

If it is determined that the session exists effectively, the document-management service unit 10 acquires the authentication ticket-A ID contained in the session, and creates an authentication ticket copy request containing the authentication ticket-A ID, the information which specifies the valid duration, and the information which specifies the entry limit, both included in the document ticket acquisition request (sequence SQ42), and transmits the authentication ticket copy request to the authentication service unit 20 (sequence SQ43).

When the authentication ticket copy request is received, the authentication service unit 20 judges the class of the authentication ticket (authentication ticket-B) to be created, based on the information which specifies the valid duration and the information which specifies the entry limit, contained in the authentication ticket copy request (sequence SQ44).

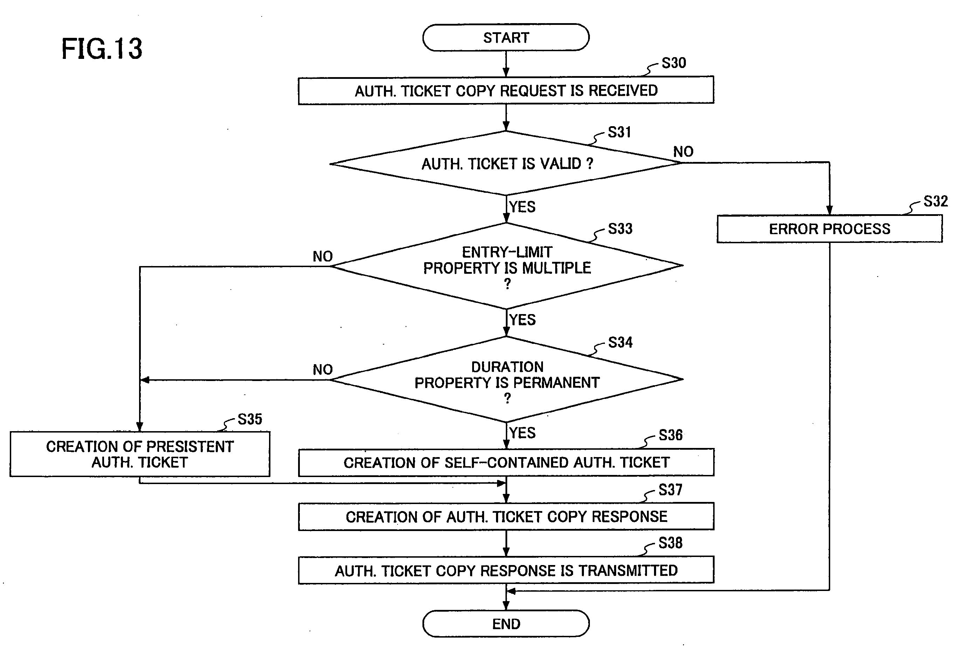

The details of the judgment processing of the class of the authentication ticket will be described later with reference to FIG. 13.

If the class of the authentication ticket to be created is judged, the authentication service unit 20 searches the corresponding authentication ticket-A based on the authentication ticket-A ID contained in the authentication ticket copy request, and copies and acquires the user information which is included in the authentication ticket-A (sequence SQ45).

The authentication service unit 20 creates an authentication ticket-B containing the valid duration and/or the entry limit, the user information copied and acquired in sequence SQ45, etc., in response to the judgment result in sequence SQ44 (sequence SQ46).

The authentication service unit 20 creates an authentication ticket copy response containing the authentication ticket-B ID which identifies the authentication ticket-B, or the encoded authentication ticket (sequence SQ47), and transmits the authentication ticket copy response to the document-management service unit 10 of the requesting source node (sequence SQ48).

In the example of FIG. 10, for the sake of simplification of description, it is supposed that the authentication ticket copy response contains the authentication ticket-B ID.

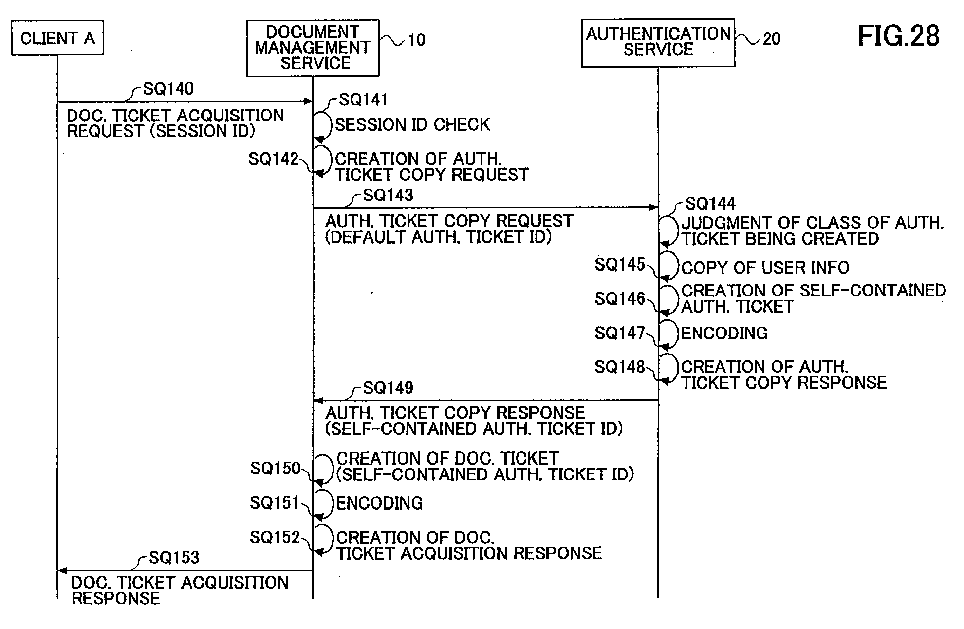

The details of creation of the authentication ticket-B and creation of the authentication ticket copy response according to the authentication ticket copy request will be explained later with reference to FIG. 25 and FIG. 28.

When the authentication ticket copy response is received, the document-management service unit 10 creates a document ticket containing the authentication ticket-B ID contained in the authentication ticket copy response (or the encoded authentication ticket), the valid duration and/or the entry limit based on the information which specifies the valid duration and/or the information which specifies the entry limit contained in the document ticket acquisition request, at least one document ID contained in the document ticket acquisition request, and the information concerning the contents of document operation permitted by the document ticket based on the information which specifies the access right of the document ticket contained in the document ticket acquisition request (sequence SQ49). An example of the document ticket is shown in FIG. 12.

When the document ticket is created, the document-management service unit 10 creates a document ticket acquisition response containing the document ticket ID which identifies the document ticket or the encoded document ticket (sequence SQ50), and transmits the document ticket acquisition response to the client of the requesting source node (or the client A in the example of FIG. 10) (sequence SQ51).

For the sake of simplification of description, it is supposed that, in the example of FIG. 10, the document ticket acquisition response contains the document ticket ID.

As shown in FIG. 10, the document-management service unit 10 requests, in response to the information which specifies the valid duration and the information which specifies the entry limit contained in the document ticket acquisition request (or in response to the class of the document ticket being created in which the valid duration and the entry limit differ according to the class), the authentication service unit 20 to create an authentication ticket-B which is associated with the copy of the user information of the authentication ticket-A. The valid duration and the entry limit are incorporated in the document ticket being created. And the authentication ticket-B containing the user information (or the information concerning the authentication ticket-B) which has succeeded the user information of the authentication ticket-A is acquired from the authentication service unit 20, and the document ticket associated with this authentication ticket-B (or the information concerning the authentication ticket-B) can be created at the document-management service unit 10.

Even in the case where a document ticket containing the valid duration and the entry limit which are unrestricted is created, the authentication ticket associated with this document ticket has the valid duration and the entry limit which are restricted. Consequently, it is possible to prevent the problem that the valid duration and the entry limit of the document ticket will be restricted because of the valid duration and the entry limit of the authentication ticket.

Next, an example of the document ticket acquisition request will be explained with reference to FIG. 11. FIG. 11 shows an example of the document ticket acquisition request.

As shown in FIG. 11, the document ticket acquisition request contains the session ID in the sessionId tag as the argument (parameter) of the getDocTicket method which indicates a document acquisition method. Also the document ticket acquisition request contains the document IDs, identifying the target documents, in the respective item tags of the docIds tag. Also, in the document ticket acquisition request, the value used as the basis of the valid duration of the document ticket is expressed in the number of seconds in the validDurationHint tag. Also, in the document ticket acquisition request, the information which specifies the valid duration of the document ticket is contained in the duration tag, the information which specifies the valid duration of the document ticket is contained in the entryLimit tag, and the information which specifies the access right of the document ticket is contained in the usage tag, respectively.

The document-management service unit 10 creates a document ticket in accordance with the parameter of the getDocTicket method contained in the document ticket acquisition request as shown in FIG. 11.

Next, an example of the document ticket will be explained with reference to FIG. 12. FIG. 12 shows an example of the document ticket.

As shown in FIG. 12, the document ticket contains the document ticket ID which identifies the document ticket, the authentication ticket-B ID, at least one document ID of target documents, the number of times of the entry limit of the document ticket concerned, the valid duration of the document ticket concerned, and the contents of document operation (reading or writing) permitted by the document ticket concerned.

In the example of FIG. 12, the valid duration of a document ticket after the time the document ticket is created is expressed in the number of seconds which indicates the valid duration of the document ticket. However, depending on the class of document ticket (for example, a permanent single ticket, a permanent multiple ticket, etc.), the valid duration and the entry limit may not be contained in the document ticket, which will be explained later.

The encoded authentication ticket-B, instead of the authentication ticket-B ID, is contained in the document ticket depending on the class of document ticket (or the class of the authentication ticket-B).

Next, an example of the creation processing of authentication ticket-B in the authentication service unit 20 will be described with reference to FIG. 13. FIG. 13 is a flowchart for explaining an example of the authentication ticket creation processing of authentication ticket-B in the authentication service.

In the processing of FIG. 13, at step S30, the authentication service unit 20 receives, from the document-management service unit 10, the authentication ticket copy request including the authentication ticket-A ID, the information which specifies the valid duration (the value (DURATION property) stored in the duration tag of FIG. 11), and the information which specifies the entry limit (the value (ENTRY_LIMIT property) stored in the entryLimit tag of FIG. 11).

Progressing to step S31 following step S30, the authentication service unit 20 judges whether an effective authentication ticket-A which corresponds to the authentication ticket-A ID exists, based on the authentication ticket-A ID contained in the authentication ticket copy request.

If it is determined that the effective authentication ticket-A corresponding to the authentication ticket-A ID exists (YES in step S31), the control of the authentication service unit 20 progresses to step S33. If it is determined that any effective authentication ticket-A corresponding to the authentication ticket-A ID does not exist (NO in step S31), the control of the authentication service unit 20 progresses to step S32.

The authentication service unit 20 searches the authentication ticket-A based on the authentication ticket-A ID, and, if the corresponding authentication ticket-A exists and the present time is within the valid duration of the authentication ticket-A, the authentication service unit 20 judges whether an effective authentication ticket-A corresponding to the authentication ticket-A ID exists.

At step S32, the authentication service unit 20 performs the error processing in which an authentication ticket copy response containing the error message indicating that any effective authentication ticket-A does not exist is created, and the authentication ticket copy response is transmitted to the document-management service unit 10 of the requesting source node. The processing of FIG. 13 is completed.

On the other hand, at step S33, the authentication service unit 20 judges whether the ENTRY_LIMIT property contained in the authentication ticket copy request is MULTIPLE.

If it is determined that the ENTRY_LIMIT property is MULTIPLE (YES in step S33), the control of the authentication service unit 20 progresses to step S34. If it is determined that the ENTRY_LIMIT property is not MULTIPLE (NO in step S33), the control of the authentication service unit 20 progresses to step S35.

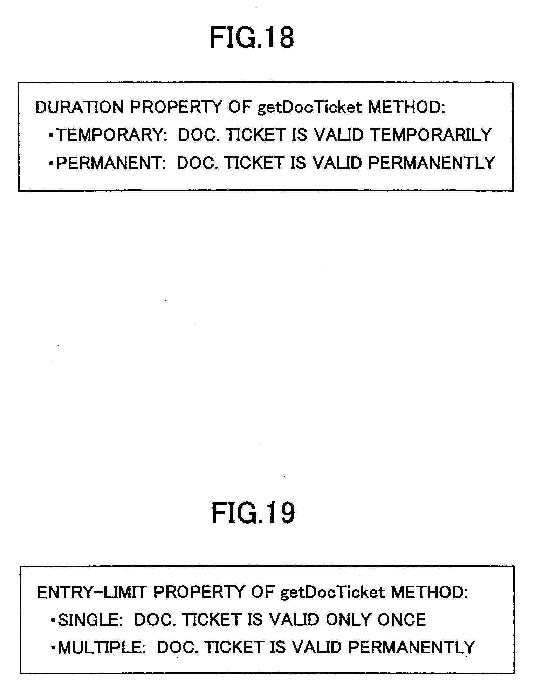

As shown in FIG. 19 which will be described later, the "Multiple" indicated in the ENTRY_LIMIT property of the getDocTicket method means that the document ticket with which the number of times of accessing the document is not restricted is specified as the entry limit of the document ticket, and the "Single" indicated in the ENTRY_LIMIT property of the getDocTicket method means that the document ticket with which accessing the document is permitted only once is specified as the entry limit of the document ticket.

At step S34, the authentication service unit 20 judges whether the DURATION property contained in the authentication ticket copy request is PERMANENT.

If it is determined that the DURATION property is PERMANENT (YES in step S34), the control of the authentication service unit 20 progresses to step S36. If it is determined that the DURATION property is not PERMANENT (NO in step S34), the control of the authentication service unit 20 progresses to step S35.

As shown in FIG. 18 which will be described later, the "Permanent" indicated in the DURATION property of the getDocTicket method means that the document ticket with which the valid duration of the document ticket is permanent is specified as the valid duration of the document ticket, and the "Temporary" indicated in the DURATION property of the getDocTicket method means that the document ticket with the valid duration of the document ticket is temporary (or the designated time limit) is specified as the valid duration of the document ticket.

At step S35, the authentication service unit 20 creates a persistent authentication ticket which contains the user information of the authentication ticket-A (default authentication ticket) and the valid duration, and is nonvolatile with the cancellation thereof being permitted.

The term "non-volatile" means that the authentication ticket exists on the memory (for example, the RAM 26 of the authentication service device 2 or the RAM 16 of document-management service device 1) and exists on the hard disk (the HDD 29 of the authentication service device 2 or the HDD 19 of the document-management service device 1), and, after restarting of service (for example, the authentication service unit 20 and the document-management service unit 10), the authentication ticket is loaded to the memory from the hard disk, and re-use of the authentication ticket is possible.

On the other hand, the term "volatile" means that the authentication ticket exists only on the memory (the RAM 26 of the authentication service device 2 and the RAM 16 of the document-management service device 1), and reuse of the authentication ticket after restarting of service (the authentication service unit 20 and the document-management service unit 10) is not possible.

The cancellation of the authentication ticket which is permitted means that the authentication ticket can be canceled on the service side (the authentication service unit 20 or the document-management service unit 10). The cancellation of the authentication ticket which is not permitted means that the authentication ticket cannot be canceled on the service side (the authentication service unit 20 or the document-management service unit 10).

On the other hand, at step S36, the authentication service unit 20 creates a self-contained authentication ticket containing the user information of authentication ticket-A (default authentication ticket), wherein the cancellation thereof is not permitted, and the valid duration is not contained, and it is dependent on the requesting source node. The source node dependence means that the ticket can be reused unless the requesting source node loses the ticket ID because the ticket is encoded and the encoded ticket (data) is returned to the requesting source node as the ticket ID.

At step S37, the authentication service unit 20 creates an authentication ticket copy response containing the persistent authentication ticket ID which identifies the persistent authentication ticket, or the self-contained authentication ticket ID which is the encoded self-contained authentication ticket.

Progressing to step S38 following step S37, the authentication service unit 20 transmits the authentication ticket copy response created in step S37 to the document-management service unit 10 of the requesting source node. Then, the processing of FIG. 13 is completed.

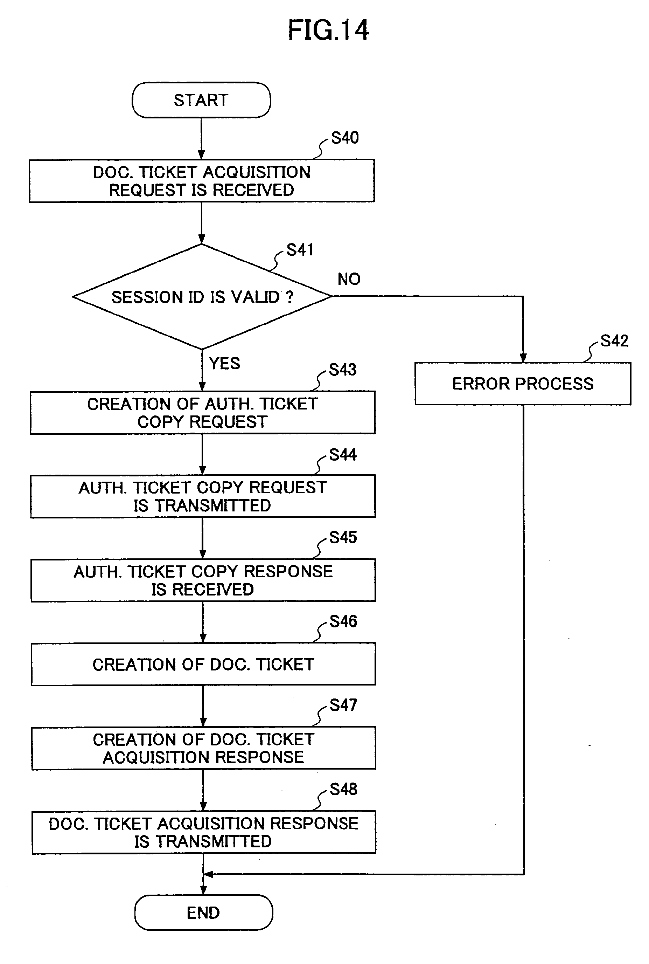

Next, an example of the document ticket creation processing using the authentication service unit 20 in the document-management service unit 10 will be explained with reference to FIG. 14. FIG. 14 is a flowchart for explaining an example of the document ticket creation processing using the authentication service in the document-management service.

In the processing of FIG. 14, at step S40, the document-management service unit 10 receives, from the client (for example, the client A), a document ticket acquisition request containing the session ID, at least one document ID (a folder ID in the case of a folder ticket acquisition request), the information which specifies the valid duration, the information which specifies the entry limit, the information which specifies the access right of the document ticket, etc.

Progressing to step S41 following step S40, the document-management service unit 10 searches and refers to the session based on the session ID contained in the document ticket acquisition request, and judges whether an effective session corresponding to the session ID exists. For example, the document-management service unit 10 determines that the effective session corresponding to the session ID exists, if the session corresponding to the session ID and the present time is within the valid duration of the session.

If it is determined that an effective session exists (YES in step S41), the control of the document-management service unit 10 progresses to step S43. If it is determined that any effective session does not exist (NO in step S41), the control of the document-management service unit 10 progresses to step S42.

At step S42, the document-management service unit 10 performs an error process in which a document ticket acquisition response containing an error message indicating that an effective session does not exist is created and transmitted to the client of the requesting source node. Then, the processing of FIG. 14 is completed.

On the other hand, at step S43, the document-management service unit 10 acquires the authentication ticket-A ID contained in the session, and creates an authentication ticket copy request containing the authentication ticket-A ID, the information which specifies the valid duration, and the information which specifies the entry limit, both included in the document ticket acquisition request.

Progressing to step S44 following step S43, the document-management service unit 10 transmits the authentication ticket copy request created in step S43, to the authentication service unit 20.

Progressing to step S45 following step S44, the document-management service unit 10 receives an authentication ticket copy response corresponding to the authentication ticket copy request transmitted in step S44, from the authentication service unit 20.

Progressing to step S46 following step S45, the document-management service unit 10 creates a document ticket containing the authentication ticket-B ID contained in the authentication ticket copy response received in step S45 (or the encoded authentication ticket), the valid duration and/or the entry limit based on the information which specifies the valid duration and/or the information which specifies the entry limit, both contained in the document ticket acquisition request received in step S40, at least one document ID contained in the document ticket acquisition request, and the information concerning the contents of document operation, which is permitted by the document ticket, based on the information which specifies the access right of the document ticket contained in the document ticket acquisition request. An example of the document ticket is as shown in FIG. 12.

Progressing to step S47 following step S46, the document-management service unit 10 creates a document ticket acquisition response containing the document ticket ID which identifies the document ticket created in step S46, or the encoded document ticket (data).

Progressing to step S48 following step S47, the document-management service unit 10 transmits the document ticket acquisition response created in step S47, to the client of the requesting source node. Then, the processing of FIG. 14 is completed.

Next, an example of the document operation processing using the authentication service unit 20 will be explained with reference to FIG. 15. FIG. 15 is a sequence diagram for explaining an example of the document operation processing using the authentication service.

In the processing of FIG. 15, the client A creates a document ticket transfer request containing the document ticket ID or the encoded document ticket, and transmits the document ticket transfer request to the client B (sequence SQ60).

For the sake of simplification of description, in FIG. 15, it is assumed that the document ticket transfer request contains the document ticket ID.

When the document ticket transfer request is received from the client A, the client B transmits a document ticket transfer response including the information indicating that the document ticket transfer request has been received, to the client A (sequence SQ61).

The client B creates a document-ticket-based document operation request containing the document ticket ID or the encoded document ticket contained in the document ticket transfer request, and the information concerning the contents of document operation, and transmits the document-ticket-based document operation request to the document-management service unit 10 (sequence SQ62).

For the sake of simplification of description, in FIG. 15, it is assumed that the document-ticket-based document operation request contains the document ticket ID. Unless otherwise specified in the following, it is assumed that the document-ticket-based document operation request contains the document ticket ID, for the sake of simplification of explanation.

When the document-ticket-based document operation request is received, the document-management service unit 10 makes reference to a corresponding document ticket based on the document ticket ID contained in the document-ticket-based document operation request, and judges whether the entry limit of the document ticket is currently valid and judges whether the valid duration of the document ticket is currently valid with respect to the present time (sequence SQ63 and sequence SQ64).

If it is determined that the entry limit and the valid duration are currently valid, the document-management service unit 10 creates a re-authentication request containing the authentication ticket-B ID contained in the document ticket (or the encoded authentication ticket) (sequence SQ65), and transmits the re-authentication request to the corresponding authentication service unit 20 (sequence SQ66).

The processing order of the checking of the entry limit performed in sequence SQ63 and the checking of the valid duration performed in sequence SQ64 may be reversed.

For the sake of simplification of description, in FIG. 15, it is assumed that the re-authentication request contains the authentication ticket-B ID. Unless otherwise specified in the following, it is assumed that the document-ticket-based re-authentication request contains the authentication ticket-B ID, for the sake of simplification of description.

When the re-authentication request is received, the authentication service unit 20 makes reference to the authentication ticket-B corresponding to the authentication ticket-B ID contained in the re-authentication request, and determines whether the target name included in the authentication ticket-B is the same as the service name of the requesting source node (or the document-management service unit 10 in this embodiment) which has transmitted the re-authentication request (sequence SQ67).

If it is determined that the target name is the same as the service name, the authentication service unit 20 makes reference to the authentication ticket-B corresponding to the authentication ticket-B ID contained in the re-authentication request, and judges whether the present time is within the valid duration contained in the authentication ticket-B (sequence SQ68).

If it is determined that the present time is within the valid duration contained in the authentication ticket-B, the authentication service unit 20 acquires the user information from the authentication ticket-B corresponding to the authentication ticket-B ID contained in the re-authentication request (sequence SQ69).

The processing order of the checking of the target name performed in sequence SQ67 and the checking of the valid duration performed in sequence SQ68 may be reversed.

When the user information is acquired, the authentication service unit 20 creates a re-authentication response containing the user information (sequence SQ70), and transmits the re-authentication response to the document-management service unit 10 of the requesting source node (sequence SQ71). The term "re-authentication" may be replaced with "re-acquisition of user information".

When the re-authentication response is received, the document-management service unit 10 establishes connection with the database by using the access right of the user (or the client A) based on the user information included in the re-authentication response (sequence SQ72).

Alternatively, the authentication service unit 20 may transmit, to the document-management service unit 10, a re-authentication response containing the user information and the authentication information, such as the user's password, and the document-management service unit 10 may establish connection with the database by using the user information and the authentication information contained in the re-authentication response.

When the connection with the database is established, the document-management service unit 10 makes reference to a corresponding document ticket based on the document ticket ID contained in the document operation request by the document ticket received in sequence SQ62, and determines whether the requested document operation is permitted for the user to perform, by comparing the information concerning the access right of the document ticket contained in the document ticket with the information concerning the contents of document operation contained in the document-ticket-based document operation request (sequence SQ73).

If it is determined that the requested document operation is permitted, the document-management service unit 10 performs the requested document operation to the document specified by the client B by using the access right of the user (or the client A) (sequence SQ74). The processing of sequence SQ73 may be performed during the period between sequence SQ63 and sequence SQ65.

After the document operation is performed, the document-management service unit 10 decrements the entry limit contained in the corresponding document ticket, and creates a document-ticket-based document operation response containing the operation result of the document (sequence SQ75), and transmits the document-ticket-based document operation response to the client B of the requesting source node (sequence SQ76).

As shown in FIG. 15, the document-management service unit 10 performs re-authentication (or re-acquisition of user information) by using the authentication service unit 20. The connection with the database is established by using the access right of the user of the authentication ticket (authentication ticket-B) associated with the document ticket, and the document operation is performed by using the access right of the user. In the case where the group to which the user belongs is updated (or changed) after the issuance of the document ticket, or in the case where the connection access right to the database regarding the user or the group corresponding to the document ticket, or the operation access right of the document regarding the user or the group corresponding to the document ticket is updated (or changed) on the database, the update (or change) of the access right can be reflected on the processing (for example, the document operation processing).

Accordingly, the processing of FIG. 15 is performed, and, even if the user using the document ticket is removed from the group with the document reference access right, after the document ticket is issued by the document-management service unit 10 and the document operation request using the document ticket subsequently issued by that user is received, the document-management service unit 10 can perform the processing such that accessing the document is not be permitted to that user.

Moreover, according to the processing of FIG. 15, it is possible to prevent the connection with the database from being established by using the superuser access right which may become a security hole as in the conventional document-management service.

Moreover, performing the processing shown in FIG. 15 allows the management of the access right in the document-management service unit 10 to be simplified.

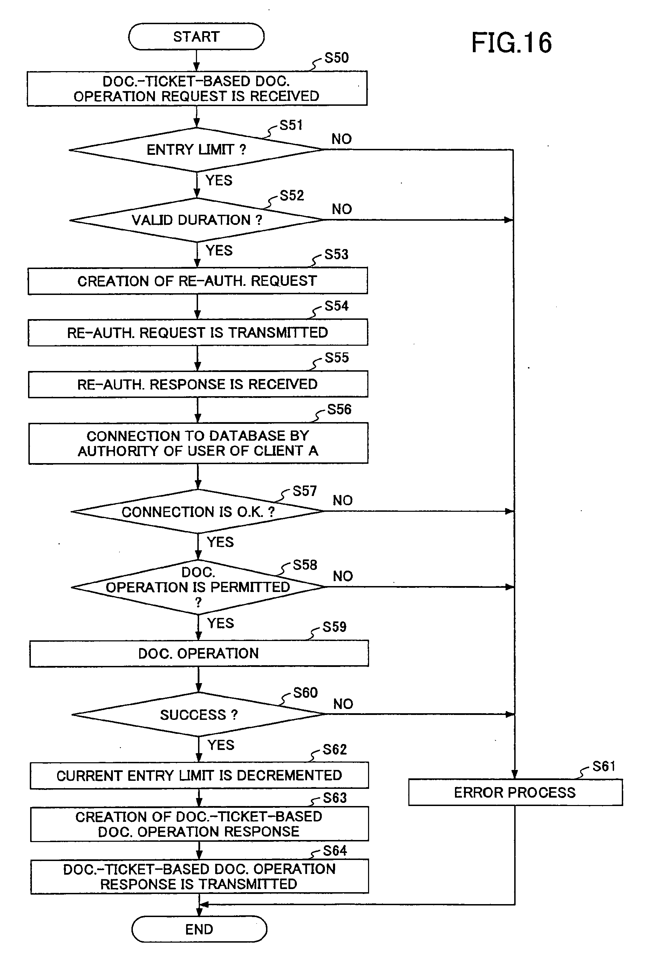

Next, an example of the document operation processing using the authentication service unit 20 in the document-management service unit 10 will be explained with reference to FIG. 16. FIG. 16 is a flowchart for explaining an example of the document operation processing using the authentication service in the document-management service.

In the processing of FIG. 16, at step S50, the document-management service unit 10 receives a document-ticket-based document operation request including the document ticket ID, and the information concerning the contents of document operation, from the client (for example, the client B).

Progressing to step S51 following step S50, the document-management service unit 10 makes reference to a corresponding document ticket based on the document ticket ID contained in the document-ticket-based document operation request, and judges whether the entry limit of the document ticket is currently valid.

If it is determined that the entry limit is currently valid (YES in step S51), the control of the document-management service unit 10 progresses to step S52. If it is determined that the entry limit is not currently valid (NO in step S51), the control of the document-management service unit 10 progresses to step S61.

At step S52, the document-management service unit 10 makes reference to the corresponding document ticket based on the document ticket ID contained in the document-ticket-based document operation request, and judges whether the present time is within the valid duration of the document ticket.

If it is determined that the present time is within the valid duration of the document ticket (YES in step S52), the control of the document-management service unit 10 progresses to step S53. If it is determined that the present time is not within the valid duration of the document ticket (NO in step S52), the control of the document-management service unit 10 progresses to step S61.

At step S53, the document-management service unit 10 creates a re-authentication request containing the authentication ticket-B ID contained in the corresponding document ticket based on the document ticket ID contained in the document-ticket-based document operation request.

Progressing to step S54 following step S53, the document-management service unit 10 transmits the re-authentication request created in step S53, to the corresponding authentication service unit 20.

Progressing to step S55 following step S54, the document-management service unit 10 receives an authentication response corresponding to the authentication request transmitted in step S54, from the authentication service unit 20.

Progressing to step S56 following step S55, the document-management service unit 10 establishes connection with the database by using the access right of the user (of the client A) based on the user information included in the re-authentication response.

Progressing to step S57 following step S56, the document-management service unit 10 judges whether the connection with the database is successful.

If it is determined that the connection with the database is successful (YES in step S57), the control of the document-management service unit 10 progresses to step S58. If it is determined that the connection with the database is not successful (NO in step S57), the control of the document-management service unit 10 progresses to step S61.

For example, the document-management service unit 10 judges whether the connection with the database is successful, in accordance with the connection response received from the database.

At step S58, the document-management service unit 10 makes reference to a corresponding document ticket based on the document ticket ID contained in the document-ticket-based document operation request by a document ticket, and determines whether the requested document operation is permitted for the user, by comparing the information concerning the access right of the document ticket contained in the document ticket with the information concerning the contents of document operation contained in the document-ticket-based document operation request.

If it is determined that the requested document operation is permitted (YES in step S58), the control of the document-management service unit 10 progresses to step S59. If it is determined that the requested document operation is not permitted (NO in step S58), the control of the document-management service unit 10 progresses to step S61.

At step S59, the document-management service unit 10 performs the document operation to the document specified by the client (for example, the client B) by using the access right of the user (of the client A).

Progressing to step S60 following step S59, the document-management service unit 10 judges whether the document operation performed in step S59 is successful. If it is determined that the document operation in step S59 is successful (YES in step S60), the control of the document-management service unit 10 progresses to step S62. If it is determined that the document operation in step S59 is not successful (NO in step S60), the control of the document-management service unit 10 progresses to step S61.

At step S61, the document-management service unit 10 performs an error processing in which a document-ticket-based document operation response containing the error message indicating the cause of the error is created and transmitted to the client of the requesting source node. Then, the processing of FIG. 16 is completed.

On the other hand, at step S62, the document-management service unit 10 decrements the entry limit contained in the corresponding document ticket. Depending on the class of the document ticket, the processing of step S62 may not be performed and the control of the document-management service unit 10 progresses to step S63.

Progressing to step S63 following step S62, the document-management service unit 10 creates a document-ticket-based document operation response containing the operation result of the document operation.

Progressing to step S64 following step S63, the document-management service unit 10 transmits the document-ticket-based document operation response created in step S63, to the client of the requesting source node (for example, the client B). Then, the processing of FIG. 16 is completed.

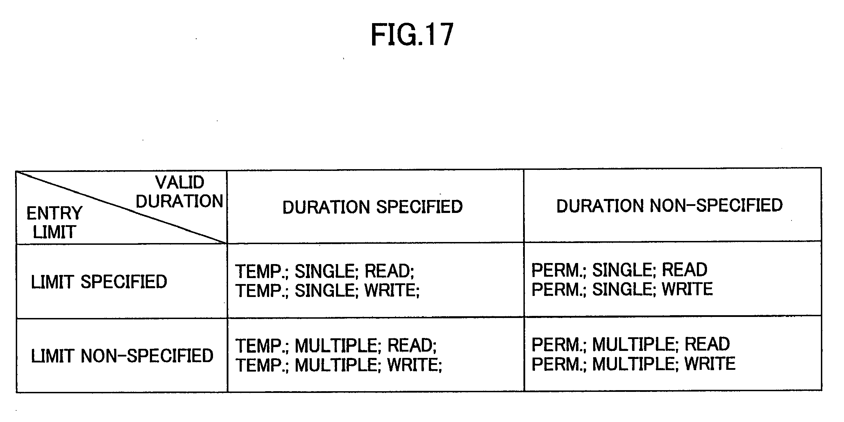

Next, an example of the class of document ticket which is created in the document-management service unit 10 based on the request from the client will be explained with reference to FIG. 17. FIG. 17 shows an example of the class of document ticket.

As shown in FIG. 17, the document ticket may be classified into a temporary single reading document ticket and a temporary single writing document ticket, which have the specified entry limit and the specified valid duration, a permanent single reading document ticket and a permanent single writing document ticket, which have the specified entry limit and the non-specified valid duration, and a permanent multiple reading document ticket and a permanent multiple writing document ticket, which have the non-specified entry limit and the non-specified valid duration.

The temporary single reading document ticket is nonvolatile, it has the cancellation possibility and the specified valid duration, and the reading operation of the document is possible only once. Since the temporary single reading document ticket is non-volatile and exists on the HDD 19 of the document-management service device 1 and on the RAM 16 of the document-management service device 1, the server resources are consumed.

The temporary single writing document ticket is nonvolatile, it has the cancellation possibility and the specified valid duration, and the writing operation of the document is possible only once. Since the temporary single writing document ticket is non-volatile and exists on the HDD 19 of the document-management service device 1 and the RAM 16 of the document-management service device 1, the server resources are consumed.

The temporary multiple reading document ticket is nonvolatile, it has the cancellation possibility and the specified valid duration, and the reading operation of the document is possible at multiple times. Since the temporary multiple reading document ticket is non-volatile and exists on the HDD 19 of the document-management service device 1 and the RAM 16 of the document-management service device 1, the server resources are consumed.

The temporary multiple writing document ticket is nonvolatile, it has the cancellation possibility and the specified valid duration, and the writing operation of the document is possible at multiple times. Since the temporary multiple writing document ticket is non-volatile and exists on the HDD 19 of the document-management service device 1 and the RAM 16 of the document-management service device 1, the server resources are consumed.

The permanent single reading document ticket is nonvolatile, it has the cancellation possibility and has the non-specified valid duration, and the reading operation of the document is possible only once. Since the permanent single reading document ticket is non-volatile and exists on the HDD 19 of the document-management service device 1 with the RAM 16 of the document-management service device 1, the server resources are consumed.

The permanent single writing document ticket is nonvolatile, it has the cancellation possibility and has the non-specified valid duration, and the writing operation of the document is possible only once. Since the permanent single writing document ticket is non-volatile and exists on the HDD 19 of the document-management service device 1 and the RAM 16 of the document-management service device 1, the server resources are consumed.

The permanent multiple reading document ticket is dependent on the requesting source node, it has not the cancellation possibility and has the non-specified valid duration, and the reading operation of the document is possible at multiple times. Since the permanent multiple reading document ticket is dependent on the requesting source node, the server resources are not consumed.

The permanent multiple writing document ticket is dependent on the requesting source node, it has not the cancellation possibility and has the non-specified valid duration, and the writing operation of the document is possible at multiple times. Since the permanent multiple writing document ticket is dependent on thee requesting source node, the server resources are not consumed.

Next, an example in which the valid duration of a document ticket is specified by the client will be explained with reference to FIG. 18. FIG. 18 shows an example which specifies the valid duration of a document ticket.

As shown in FIG. 18, the client adds a DURATION property to the getDocTicket method of the document ticket acquisition request as shown in FIG. 11. By setting the DURATION property to TEMPORARY, the client can request the document-management service unit 10 to create a temporarily valid document ticket (the valid duration specified by the client A). Moreover, by setting the DURATION property to PERMANENT, the client can request the document-management service unit 10 to create a permanently valid document ticket.

Next, an example in which the entry limit of a document ticket is specified by the client will be explained with reference to FIG. 19. FIG. 19 shows an example in which the entry limit of a document ticket is specified.

As shown in FIG. 19, the client adds an ENTRY_LIMIT property to the getDocTicket method of the document ticket acquisition request as shown in FIG. 11. By setting the ENTRY_LIMIT property to SINGLE, the client can request the document-management service unit 10 to create a single document ticket the use of which is permitted only once. Moreover, by setting the ENTRY_LIMIT property to MULTIPLE, the client A can request the document-management service unit 10 to create a multiple document ticket the use of which is permitted at multiple times.

The document-management service unit 10 creates a document ticket of the class as shown in FIG. 17 according to the value of the DURATION property and/or the value of the ENTRY_LIMIT property of the getDocTicket method. As mentioned above, according to the value of the DURATION property and/or the value of the ENTRY_LIMIT property of the getDocTicket method, the document-management service unit 10 creates an authentication ticket copy request, and transmits the authentication ticket copy request to the authentication service unit 20.

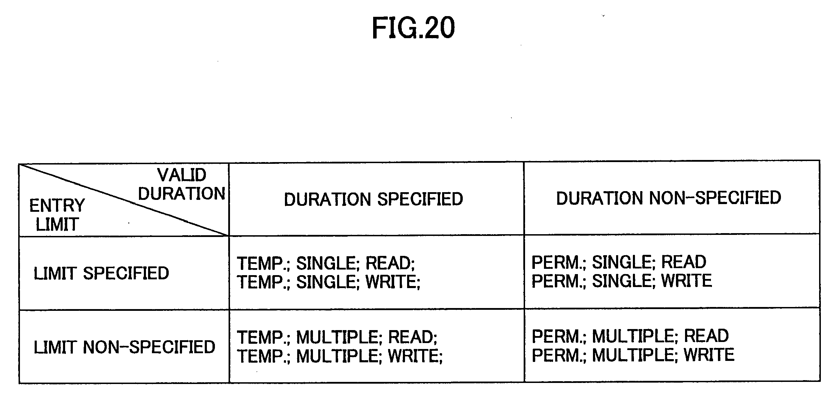

Next, an example of the class of folder ticket which is created in the document-management service unit 10 based on the request from the client will be explained with reference to FIG. 20. FIG. 20 shows an example of the class of folder ticket.

As shown in FIG. 20, the folder ticket may be classified into a temporary single reading folder ticket and a temporary single writing folder ticket, which have the specified entry limit and the specified valid duration, a permanent single reading folder ticket and a permanent single writing folder ticket, which have the specified entry limit and the non-specified valid duration, and a permanent multiple reading folder ticket and a permanent multiple writing folder ticket, which have the non-specified entry limit and the non-specified valid duration.

The temporary single reading folder ticket is nonvolatile, it has the cancellation possibility and the specified valid duration, and the reading operation of a document in the folder is possible only once. Since the temporary single reading folder ticket is non-volatile and exists on the HDD 19 of the document-management service device 1 and the RAM 16 of the document-management service device 1, the server resources are consumed.

The temporary single writing folder ticket is non-volatile, it has the cancellation possibility and the specified valid duration, and the writing operation of a document in the folder is possible only once. Since the temporary single writing folder ticket is non-volatile and exists on the HDD 19 of the document-management service device 1 and the RAM 16 of the document-management service device 1, the server resources are consumed.

The temporary multiple reading folder ticket is non-volatile, it has the cancellation possibility and the specified valid duration, and the reading operation of a document in the folder is possible at multiple times. Since the temporary multiple reading folder ticket is non-volatile and exists on the HDD 19 of the document-management service device 1 and the RAM 16 of the document-management service device 1, the server resources are consumed.

The temporary multiple writing folder ticket is non-volatile, it has the cancellation possibility and the specified valid duration, and the writing operation of a document in the folder is possible at multiple times. Since the temporary multiple writing folder ticket is non-volatile and exists on the HDD 19 of the document-management service device 1 and the RAM 16 of the document-management service device 1, the server resources are consumed.

The permanent single reading folder ticket is non-volatile, it has the cancellation possibility and has the non-specified valid duration, and the reading operation of a document in the folder is possible only once. Since the permanent single reading folder ticket is non-volatile and exists on the HDD 19 of the document-management service device 1 and the RAM 16 of the document-management service device 1, the server resources are consumed.

The permanent single writing folder ticket is non-volatile, it has the cancellation possibility and has the non-specified valid duration, and the writing operation of a document in the folder is possible only once. Since the permanent single writing folder ticket is non-volatile and exists on the HDD 19 of the document-management service device 1 and the RAM 16 of the document-management service device 1, the server resources are consumed.

The permanent multiple reading folder ticket is dependent on the requesting source node, it have not the cancellation possibility and has the non-specified valid duration, and the reading operation of a document in the folder is possible at multiple times. Since the permanent multiple reading folder ticket is dependent on the requesting source node, the server resources are not consumed.

The permanent multiple writing folder ticket is dependent on the requesting source node, it has not the cancellation possibility and has the non-specified valid duration, and the writing operation of a document in the folder is possible at multiple times. Since the permanent multiple writing folder ticket is dependent on the requesting source node, the server resources are not consumed.

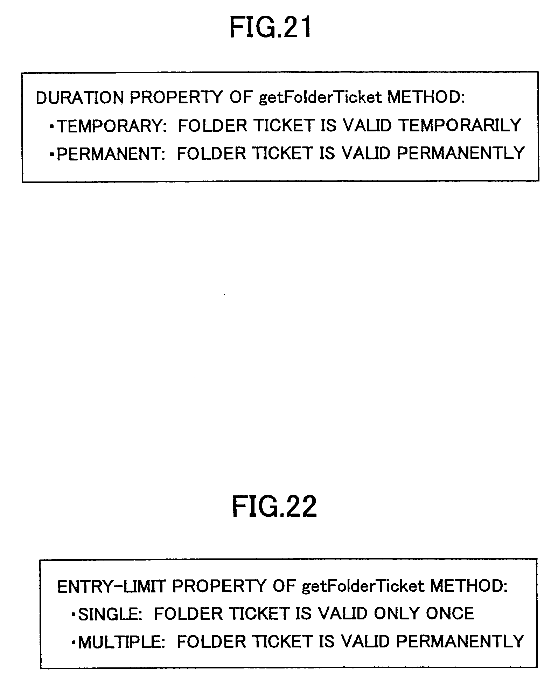

Next, an example in which the valid duration of a folder ticket is specified by the client will be explained with reference to FIG. 21. FIG. 21 shows an example in which the valid duration of a folder ticket is specified.

As shown in FIG. 21, the client adds a DURATION property to the getFolderTicket method of a folder ticket acquisition request. By setting the DURATION property to TEMPORARY, the client can requests the document-management service unit 10 to create a temporarily valid folder ticket (the valid duration is specified by the client A). Moreover, by setting the DURATION property to PERMANENT, the client can request the document-management service unit 10 to create a permanently valid folder ticket.

Next, an example in which specifies the entry limit of a folder ticket is specified by the client will be explained with reference to FIG. 22. FIG. 22 shows an example in which the entry limit of a folder ticket is specified.

As shown in FIG. 22, a client adds an ENTRY_LIMIT property to the getFolderTicket method of a folder ticket acquisition request. By setting the ENTRY_LIMIT property to SINGLE, the client can request the document-management service unit 10 to create a single folder ticket the use of which is permitted only once. Moreover, by setting the ENTRY_LIMIT property to MULTIPLE, the client A can request the document-management service unit 10 to create a multiple folder ticket the use of which is permitted at multiple times.

The document-management service unit 10 creates a folder ticket of the class as shown in FIG. 20 according to the value of the DURATION property and/or the value of the ENTRY_LIMIT property of the getFolderTicket method. According to the value of the DURATION property and/or the value of the ENTRY_LIMIT property of the getFolderTicket method, the document-management service unit 10 creates an authentication ticket copy request, and transmits the authentication ticket copy request to the authentication service unit 20.

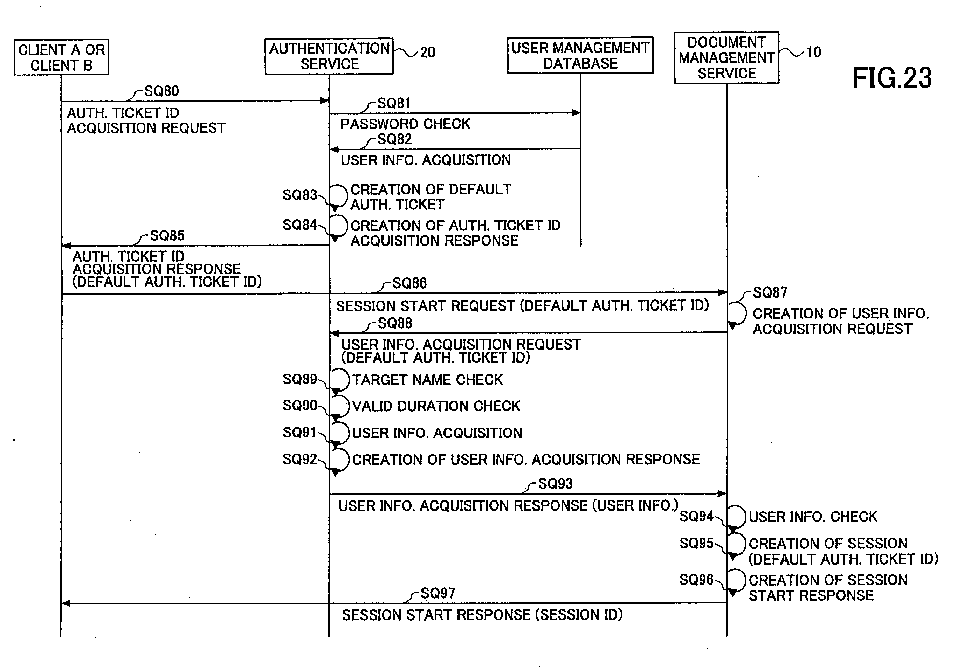

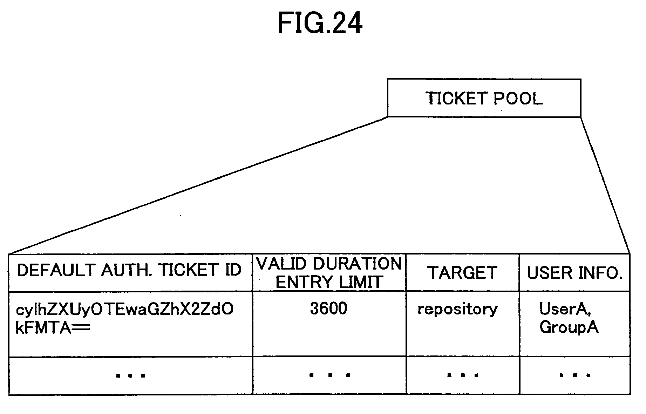

Next, an example of the processing concerning a default authentication ticket which has been described as the authentication ticket-A in the above-mentioned processing for the sake of simplification of explanation, will be explained with reference to FIG. 23 and FIG. 24.

FIG. 23 is a sequence diagram for explaining of an example of the processing concerning the default authentication ticket.

The client A or the client B creates an authentication ticket ID acquisition request including the authentication information, such as a user ID, a password, etc., the target name (or target identifier) with which connection (session start) is established using the authentication ticket ID acquired by the client A or the client B, and the information which specifies the valid duration of the authentication ticket, and transmits the authentication ticket ID acquisition request to the authentication service unit 20 (sequence SQ80).

When the authentication ticket ID acquisition request is received, the authentication service unit 20 makes reference to the user management database (DB) which manages and retains the user's authentication information and the user information, based on the authentication information included in the authentication ticket ID acquisition request. And the authentication service unit 20 compares the password stored in the user management DB of the user identified by the user ID, with the password contained in the authentication ticket ID acquisition request (sequence SQ81).

If it is determined that the password is valid, the authentication service unit 20 acquires the user information of the user corresponding to the user ID, from the user management DB (sequence SQ82).

When the user information is acquired, the authentication service unit 20 creates a default authentication ticket (as shown in FIG. 24) containing the user information, the valid duration based on the information which specifies the valid duration of the authentication ticket (default authentication ticket) contained in the authentication ticket ID acquisition request, the target name (or target identifier) included in the authentication ticket ID acquisition request, the default authentication ticket ID which identifies the default authentication ticket (sequence SQ83), and stores the default authentication ticket in the ticket pool on the RAM 26, and manages the stored default authentication ticket.

The authentication service unit 20 creates an authentication ticket ID acquisition response containing the default authentication ticket ID which identifies the created default authentication ticket (sequence SQ84), and transmits the authentication ticket ID acquisition response to the client of the requesting source node (sequence SQ85).

When the authentication ticket ID acquisition response is received, the client A or the client B creates a session start request including the default authentication ticket ID, the information which specifies the valid duration of the session, using the default authentication ticket ID contained in the authentication ticket ID acquisition response, and transmits the session start request to the document-management service unit 10 (sequence SQ86).

When the session start request is received, the document-management service unit 10 creates a user information acquisition request containing the default authentication ticket ID using the default authentication ticket ID contained in the session start request (sequence SQ87), and transmits the user information acquisition request to the authentication service unit 20 (sequence SQ88).

When the user information acquisition request is received, the authentication service unit 20 makes reference to the default authentication ticket corresponding to the default authentication ticket ID contained in the user information acquisition request. And the authentication service unit 20 judges whether the target name included in the default authentication ticket is the same as the service name (the document-management service unit 10 in this embodiment) of the requesting source node which has transmitted the user information acquisition request (sequence SQ89).

If it is determined that the target name is the same as the service name, the authentication service unit 20 makes reference to the default authentication ticket corresponding to the default authentication ticket ID contained in the user information acquisition request, and judges whether the present time is within the valid duration contained in the default authentication ticket (sequence SQ90).

If it is determined that the present time is within the valid duration contained in the default authentication ticket, the authentication service unit 20 acquires the user information from the default authentication ticket corresponding to the default authentication ticket ID contained in the user information acquisition request (sequence SQ91).

When the user information is acquired, the authentication service unit 20 creates a user information acquisition response including the user information (sequence SQ92), and transmits the user information acquisition response to the document-management service unit 10 of the requesting source node (sequence SQ93).

When the user information acquisition response is received, the document-management service unit 10 judges whether the user (or client) of the user information included in the user information acquisition response is permitted to start the session (sequence SQ94).

If it is determined that the user (or client) is permitted to start the session, the document-management service unit 10 creates the session of the document-management service unit 10 and the client of the requesting source node, containing the default authentication ticket ID (sequence SQ95), and stores the created session in the RAM 16 and the HDD 19 and manages the stored session.

The document-management service unit 10 creates a session start response containing the session ID which identifies the created session (sequence SQ96), and transmits the session start response to the client of the requesting source node (sequence SQ97).

Next, an example in which a default authentication ticket is stored in the ticket pool on the RAM 26 and managed will be explained with reference to FIG. 24. FIG. 24 shows an example in which a default authentication ticket is stored in the ticket pool and managed with the ticket pool.

As shown in FIG. 24, the default authentication ticket is retained and managed by the authentication service unit 20 in the ticket pool on the RAM 26 of the authentication service device 2.

Next, an example of the processing concerning the persistent authentication ticket which has been described as the authentication ticket-B in the above-mentioned processing for the sake of simplification of description, will be explained with reference to FIG. 25, FIG. 26 and FIG. 27.

FIG. 25 is a sequence diagram for explaining the processing concerning the persistent authentication ticket.

In the processing of FIG. 25, the client A creates a document ticket acquisition request including, as showed in FIG. 11, the session ID, at least one document ID, the information which specifies the valid duration, the information which specifies the entry limit, the information which specifies the access right of a document ticket, etc., and transmits the same to the document-management service unit 10 (sequence SQ100).

When the document ticket acquisition request is received, the document-management service unit 10 searches and refers to a corresponding session based on the session ID contained in the document ticket acquisition request, and judges whether the session exists effectively (sequence SQ101).

If it is determined that the session exists effectively, the document-management service unit 10 acquires the default authentication ticket ID contained in the session, and creates an authentication ticket copy request including the default authentication ticket ID, the information which specifies the valid duration, and the information which specifies the entry limit contained in the document ticket acquisition request (sequence SQ102), and transmits the authentication ticket copy request to the authentication service unit 20 (sequence SQ103).

When the authentication ticket copy request is received, the authentication service unit 20 judges the class of the authentication ticket being created, based on the information which specifies the valid duration and the information which specifies the entry limit, contained in the authentication ticket copy request (sequence SQ104).

In the processing of FIG. 25, it is assumed that the authentication service unit 20 creates a persistent authentication ticket as a result of the judgment in sequence SQ104.

After the class of the authentication ticket being created is judged, the authentication service unit 20 searches a corresponding default authentication ticket based on the default authentication ticket ID contained in the authentication ticket copy request, and acquires the user information included in the default authentication ticket by copying of the user information (sequence SQ105).

The authentication service unit 20 creates a persistent authentication ticket including the valid duration and/or the entry limit, and the user information copied and acquired in sequence SQ105, in response to the judgment result in sequence SQ104 (sequence SQ106).

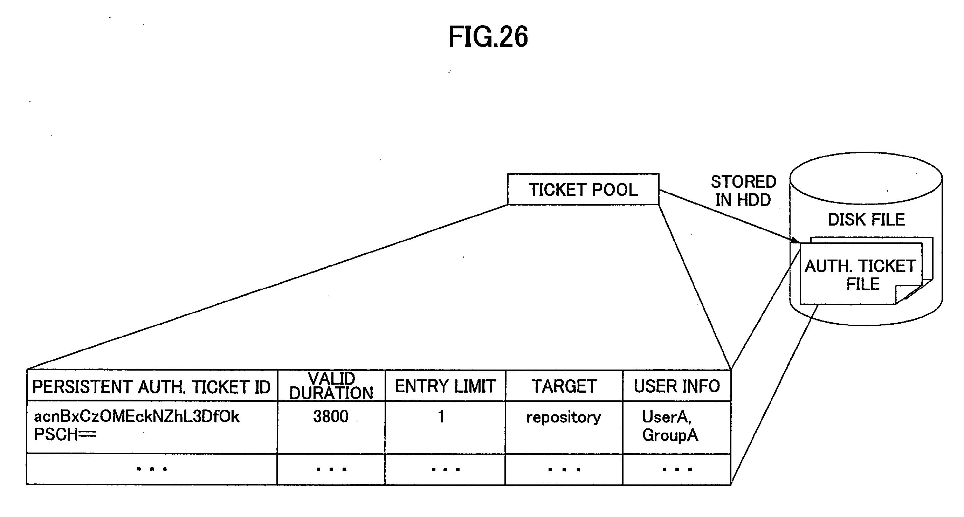

After the persistent authentication ticket is created, the authentication service unit 20 stores and manages the created persistent authentication ticket in the ticket pool on the RAM 26 of the authentication service device 2. Moreover, the authentication service unit 20 creates a file of the persistent authentication ticket (the authentication ticket file) as shown in FIG. 26, and stores the file in the HDD 29 of the authentication service device 2 (sequence SQ107).

After the sequence SQ107 is performed, the authentication service unit 20 creates an authentication ticket copy response containing the persistent authentication ticket ID which identifies the persistent authentication ticket (sequence SQ108), and transmits the authentication ticket copy response to the document-management service unit 10 of the requesting source node (sequence SQ109).

After the authentication ticket copy response is received, the document-management service unit 10 creates a document ticket containing the persistent authentication ticket ID contained in the authentication ticket copy response, the valid duration and/or the entry limit based on the information which specifies the valid duration and/or the information which specifies the entry limit contained in the document ticket acquisition request, at least one document ID contained in the document ticket acquisition request, the information concerning the contents of document operation permitted by the document ticket and based on the information which specifies the access right of the document ticket contained in the document ticket acquisition request (sequence SQ110). The document ticket created in sequence SQ110 may be a temporary single reading document ticket, a temporary single writing document ticket, a temporary multiple reading document ticket, a temporary multiple writing document ticket, a permanent single reading document ticket, or a permanent single writing document ticket.

After the document ticket is created, the document-management service unit 10 creates a document ticket acquisition response containing the document ticket ID which identifies the document ticket (sequence SQ111), and transmits the document ticket acquisition response to the client of the requesting source node (or the client A in the example of FIG. 25) (sequence SQ112).

As shown in FIG. 25, the document-management service unit 10 responds to the information which specifies the valid duration and/or the information which specifies the entry limit, contained in the document ticket acquisition request. That is, in the processing of FIG. 25, the class of document ticket to be created is selected from among a temporary single reading document ticket, a temporary single writing document ticket, a temporary multiple reading document ticket, a temporary multiple writing document ticket, a permanent single reading document ticket, and a permanent single writing document ticket.

By requesting the authentication service unit 20 to create the authentication ticket associated with the copy of the user information of the default authentication ticket, it is possible that the document ticket being created contains the valid duration and/or the entry limit, and the user information is created by acquiring from the authentication service unit 20 the ID of the persistent authentication ticket which has succeeded the user information of the default authentication ticket, and the document ticket associated with the persistent authentication ticket is created.

Next, an example in which a persistent authentication ticket is stored as a file on the HDD 29 of the authentication service device 2, with the ticket pool on the RAM 26 of the authentication service device 2 and managed with the file will be explained with reference to FIG. 26. FIG. 26 shows an example in which a persistent authentication ticket is stored and managed as a file on the HDD, with the ticket pool on the RAM.

As shown in FIG. 26, a persistent authentication ticket is stored and managed by the authentication service unit 20 as a file on the HDD 29 of the authentication service device 2 and on the ticket pool on the RAM 26 of the authentication service device 2.

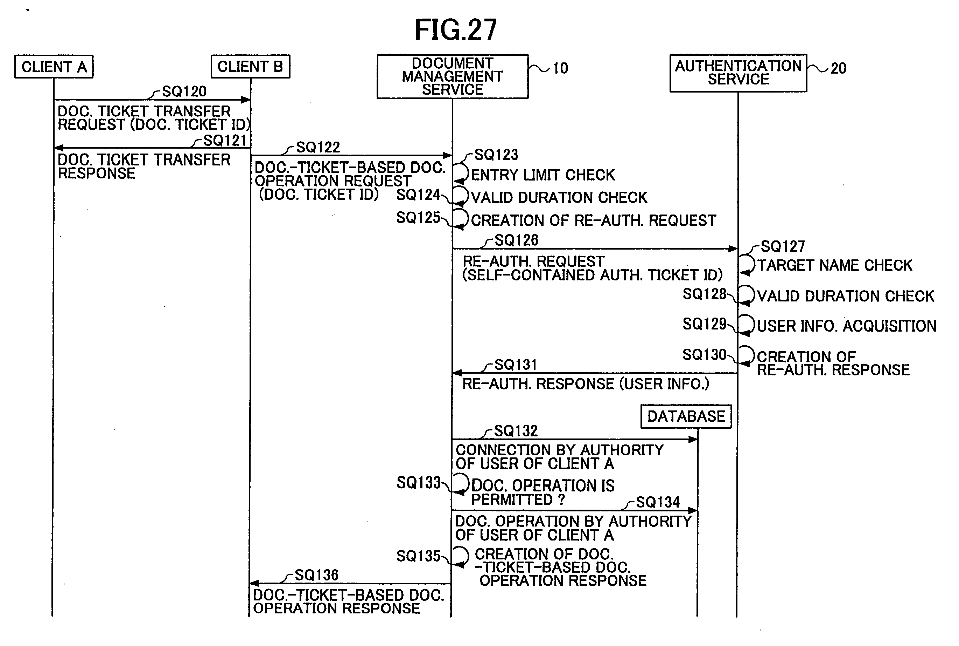

Next, another example of the processing concerning a persistent authentication ticket will be explained with reference to FIG. 27. FIG. 27 is a sequence diagram for explaining the processing concerning a persistent authentication ticket.

In the processing of FIG. 27, the client A creates a document ticket transfer request containing the document ticket ID, and transmits the document ticket transfer request to the client B (sequence SQ120).

When the document ticket transfer request is received from the client A, the client B transmits a document ticket transfer response including the information indicating that the document ticket transfer request has been received, to the client A (sequence SQ121).

Moreover, the client B creates a document-ticket-based document operation request including the document ticket ID contained in the document ticket transfer request, and the information concerning the contents of document operation, and transmits the document-ticket-based document operation request to the document-management service unit 10 (sequence SQ122).

When the document-ticket-based document operation request is received, the document-management service unit 10 makes reference to a corresponding document ticket based on the document ticket ID contained in the document-ticket-based document operation request, and judges whether the entry limit and the valid duration of the document ticket are currently valid (sequence SQ123 and sequence SQ124).

If it is determined that the entry limit and the valid duration of the document ticket are currently valid, the document-management service unit 10 creates a re-authentication request containing the persistent authentication ticket ID contained in the document ticket (sequence SQ125), and transmits the re-authentication request to the corresponding authentication service unit 20 (sequence SQ126).

When the re-authentication request is received, the authentication service unit 20 makes reference to the persistent authentication ticket corresponding to the persistent authentication ticket ID contained in the re-authentication request, and judges whether the target name included in the persistent authentication ticket is the same as the service name (or the document-management service unit 10 in this embodiment) of the requesting source node which has transmitted the re-authentication request (sequence SQ127).

If it is determined that the target name is the same as the service name, the authentication service unit 20 makes reference to the persistent authentication ticket corresponding to the persistent authentication ticket ID contained in the re-authentication request, and judges whether the present time is within the valid duration contained in the persistent authentication ticket (sequence SQ128).

If it is determined that the present time is within the valid duration contained in the persistent authentication ticket, the authentication service unit 20 acquires the user information from the persistent authentication ticket corresponding to the persistent authentication ticket ID contained in the re-authentication request (sequence SQ129).

When the user information is acquired, the authentication service unit 20 creates a re-authentication response including the user information (sequence SQ130), and transmits the re-authentication response to the document-management service unit 10 of the requesting source node (sequence SQ131).

When the re-authentication response is received, the document-management service unit 10 establishes connection with the database by using the access right of the user (or client A) based on the user information included in the re-authentication response (sequence SQ132).

When the connection with the database is established, the document-management service unit 10 makes reference to a corresponding document ticket based on the document ticket ID contained in the document-ticket-based document operation request received in sequence SQ122, and judges whether the requesting document operation is permitted for the user, by comparing the information concerning the access right of the document ticket contained in the document ticket with the information concerning the contents of document operation contained in the document-ticket-based document operation request (sequence SQ133).

If it is determined that the requesting document operation is permitted for the user, the document-management service unit 10 performs the document operation to the document which is specified by the client B, by using the access right of the user (or the client A) (sequence SQ134).

After the document operation is completed, the document-management service unit 10 decrements the entry limit contained in the corresponding document ticket, and creates a document-ticket-based document operation response including the operation result of the document operation (sequence SQ135), and transmits the document-ticket-based document operation response to the client B of the requesting source node (sequence SQ136).

Next, an example of the processing concerning a self-contained authentication ticket which has been described in the above-mentioned processing as the authentication ticket-B, for the sake of simplification of explanation, will be explained with reference to FIG. 28, FIG. 29, FIG. 30 and FIG. 31. FIG. 28 is a sequence diagram for explaining the processing concerning a self-contained authentication ticket.

In the processing of FIG. 28, the client A creates a document ticket acquisition request including, as shown in FIG. 11, the session ID, at least one document ID, the information which specifies the valid duration, the information which specifies the entry limit, the information which specifies the access right of a document ticket, etc., and transmits the document ticket acquisition request to the document-management service unit 10 (sequence SQ140).

When the document ticket acquisition request is received, the document-management service unit 10 searches and refers to a corresponding session based on the session ID contained in the document ticket acquisition request, and judges whether the corresponding session exists effectively (sequence SQ141).

If it is determined that the session exists effective, the document-management service unit 10 acquires a default authentication ticket ID contained in the session, and creates an authentication ticket copy request including the default authentication ticket ID, and the information which specifies the valid duration and the information which specifies the entry limit, included in the document ticket acquisition request (sequence SQ142), and transmits the authentication ticket copy request to the authentication service unit 20 (sequence SQ143).

When the authentication ticket copy request is received, the authentication service unit 20 judges the class of the authentication ticket being created, based on the information which specifies the entry limit and/or the information which specifies the valid duration, contained in the authentication ticket copy request (sequence SQ144).

In the processing of FIG. 28, it is assumed that the authentication service unit 20 creates a self-contained authentication ticket as a result of the judgment in sequence SQ104.

When the class of the authentication ticket being created is judged, the authentication service unit 20 makes reference to a corresponding default authentication ticket based on the default authentication ticket ID contained in the authentication ticket copy request, and acquires the user information included in the default authentication ticket by copying of the user information (sequence SQ145).

The authentication service unit 20 creates a self-contained authentication ticket including the acquired user information copied in sequence SQ145, in response to the judgment result in sequence SQ144 (sequence SQ146).

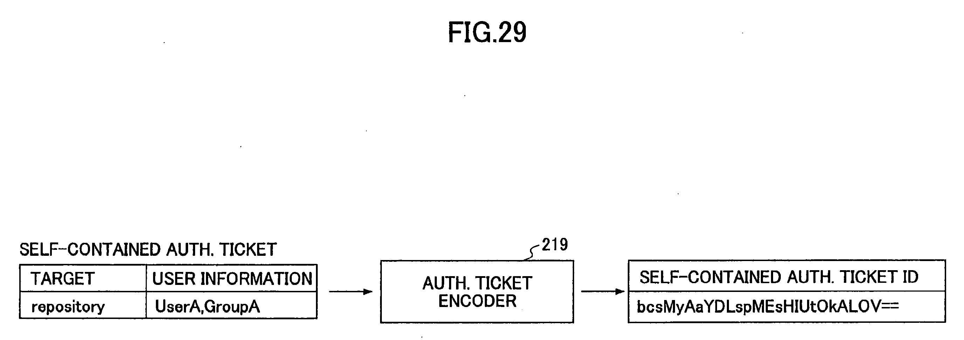

After the self-contained authentication ticket is created, the authentication service unit 20 encodes the created self-contained authentication ticket (sequence SQ147) as shown in FIG. 29 which will be described later.

The authentication service unit 20 creates an authentication ticket copy response containing the self-contained authentication ticket ID by considering the encoded self-contained authentication ticket as the self-contained authentication ticket ID (sequence SQ148), and transmits the authentication ticket copy response to the document-management service unit 10 of the requesting source node (sequence SQ149).

After the authentication ticket copy response is received, the document-management service unit 10 creates a document ticket (for example, a permanent multiple reading document ticket or a permanent multiple writing document ticket) including the self-contained authentication ticket ID contained in the authentication ticket copy response, the valid duration and/or the entry limit based on the information which specifies the valid duration and/or the information which specifies the entry limit contained in the document ticket acquisition request, at least one document ID contained in the document ticket acquisition request, and the information concerning the contents of document operation permitted by the document ticket and based on the information which specifies the access right of the document ticket contained in the document ticket acquisition request (sequence SQ150). In the case of a permanent multiple reading document ticket or a permanent multiple writing document ticket, the document ticket created may not include the valid duration and the entry limit.

The document-management service unit 10 encodes the created document ticket (sequence SQ151), and creates a document ticket acquisition response containing the document ticket ID by considering the encoded document ticket as the document ticket ID (sequence SQ152), and transmits the document ticket acquisition response to the client of the requesting source node (or the client A in the example of FIG. 28) (sequence SQ153).

As shown in FIG. 28, the document-management service unit 10 responds to the information which specifies the entry limit and/or the information which specifies the valid duration contained in the document ticket acquisition request. That is, in the processing of FIG. 28, the class of the document ticket being created is determined from either a permanent multiple reading document ticket or a permanent multiple writing document ticket.

By requesting the authentication service unit 20 to create the authentication ticket associated with the copy of the user information of the default authentication ticket, it is possible that the document ticket being created contains the valid duration and/or the entry limit, and the user information is created by acquiring from the authentication service unit 20 the ID of the persistent authentication ticket which has succeeded the user information of the default authentication ticket, and the document ticket associated with the persistent authentication ticket is created.

Next, an example in which a self-contained authentication ticket is encoded into a self-contained authentication ticket ID in the authentication service unit 20 will be explained with reference to FIG. 29. FIG. 29 shows an example in which a self-contained authentication ticket is encoded and a self-contained authentication ticket ID is set.

As shown in FIG. 29, the authentication service unit 20 encodes the created self-contained authentication ticket using the authentication ticket encoder 219, and considers the result of the encoding (or the encoded ticket) as the self-contained authentication ticket ID.

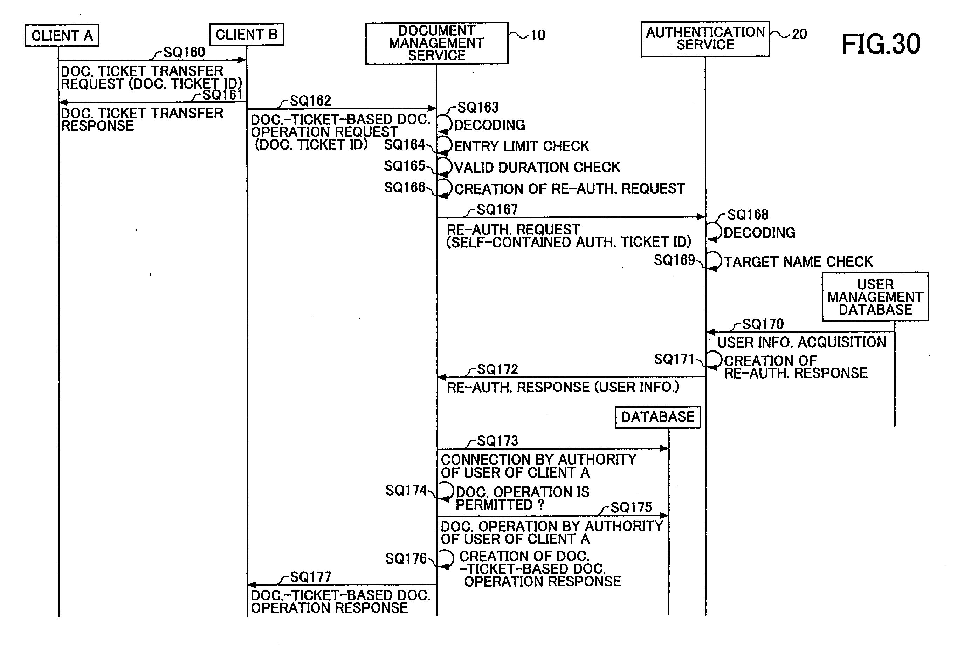

Next, another example of the processing concerning a self-contained authentication ticket will be explained with reference to FIG. 30. FIG. 30 is a sequence diagram for explaining the processing concerning a self-contained authentication ticket.

In the processing of FIG. 30, the client A creates a document ticket transfer request containing the document ticket ID, and transmits the document ticket transfer request to the client B (sequence SQ160).

After the document ticket transfer request is received from the client A, the client B transmits a document ticket transfer response including the information indicating that the document ticket transfer request has been received, to the client A (sequence SQ161).

Moreover, the client B creates a document-ticket-based document operation request including the document ticket ID contained in the document ticket transfer request, and the information concerning the contents of document operation, etc., and transmits the document-ticket-based document operation request to the document-management service unit 10 (sequence SQ162).

After the document-ticket-based document operation request is received, if the document ticket ID contained in the document-ticket-based document operation request is derived from the encoded document ticket, the document-management service unit 10 decodes the document ticket ID (sequence SQ163). And the document-management service unit 10 makes reference to the document ticket based on the decoded document ticket ID, and judges whether the entry limit and the valid duration of the document ticket are currently valid (sequence SQ164 and sequence SQ165).

If it is determined that the entry limit and the valid duration of the document ticket are currently valid, the document-management service unit 10 creates a re-authentication request containing the self-contained authentication ticket ID contained in the document ticket (sequence SQ166), and transmits the re-authentication request to the authentication service unit 20 (sequence SQ167).

Alternatively, the document-management service unit 10 may be configured so that, when it is found out that the document ticket ID contained in the document-ticket-based document operation request is derived from the encoded the document ticket, the document-management service unit 10 determines the document ticket as being a permanent multiple reading document ticket or a permanent multiple writing document ticket, without performing the check of the entry limit and the valid duration.

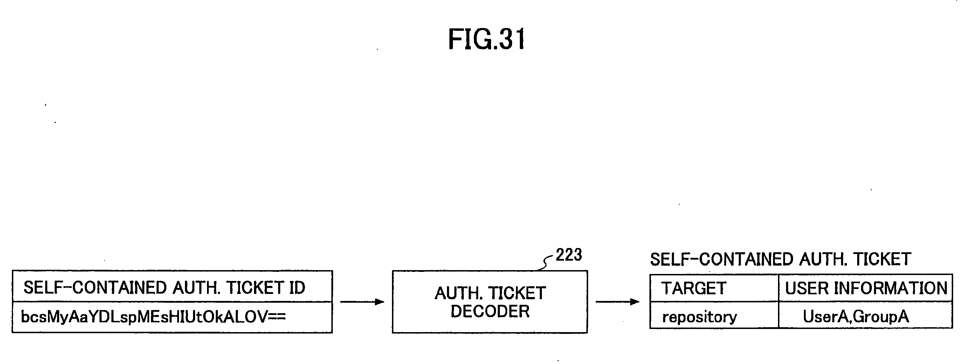

After the re-authentication request is received, the authentication service unit 20 decodes the self-contained authentication ticket ID contained in the re-authentication request (sequence SQ168) as shown in FIG. 31 which will be described later. And, by making reference to the decoded self-contained authentication ticket, the authentication service unit 20 determines whether the target name contained in the self-contained authentication ticket is the same as the service name (the document-management service unit 10 in this embodiment) of the transmission source which has transmitted the re-authentication request (sequence SQ169).

If it is determined that the target name and the service name are the same, the authentication service unit 20 acquires the user information corresponding to the self-contained authentication ticket ID from the user management database which manages the user information (sequence SQ170).

After the user information is acquired, the authentication service unit 20 creates a re-authentication response including the acquired user information (sequence SQ171), and transmits the re-authentication response to the document-management service unit 10 of the requesting source node (sequence SQ172).

After the re-authentication response is received, the document-management service unit 10 establishes connection with the database by using the access right of the user (or client A) based on the user information included in the re-authentication response (sequence SQ173).

After the connection with the database is established, the document-management service unit 10 makes reference to the document ticket decoded in sequence SQ163, and judges whether the requesting document operation is permitted for the user, by comparing the information concerning the access right of the document ticket contained in the document ticket with the information concerning the contents of document operation contained in the document-ticket-based document operation request (sequence SQ174).

If it is determined that requesting document operation is permitted, the document-management service unit 10 performs the document operation to the document specified by the client B, by using the access right of the user (or the client A) (sequence SQ175).

After the document operation is completed, the document-management service unit 10 creates a document-ticket-based document operation response including the operation result of the document operation (sequence SQ176), and transmits the document-ticket-based document operation response to the client B of the requesting source node (sequence SQ177).

Next, an example in which a self-contained authentication ticket ID is decoded in the authentication service unit 20 will be explained with reference to FIG. 31. FIG. 31 is a diagram for explaining an example in which a self-contained authentication ticket ID is decoded.

As shown in FIG. 31, the authentication service unit 20 decodes the self-contained authentication ticket ID using the authentication ticket decoder 223, so that the reconstructed self-contained authentication ticket is created.

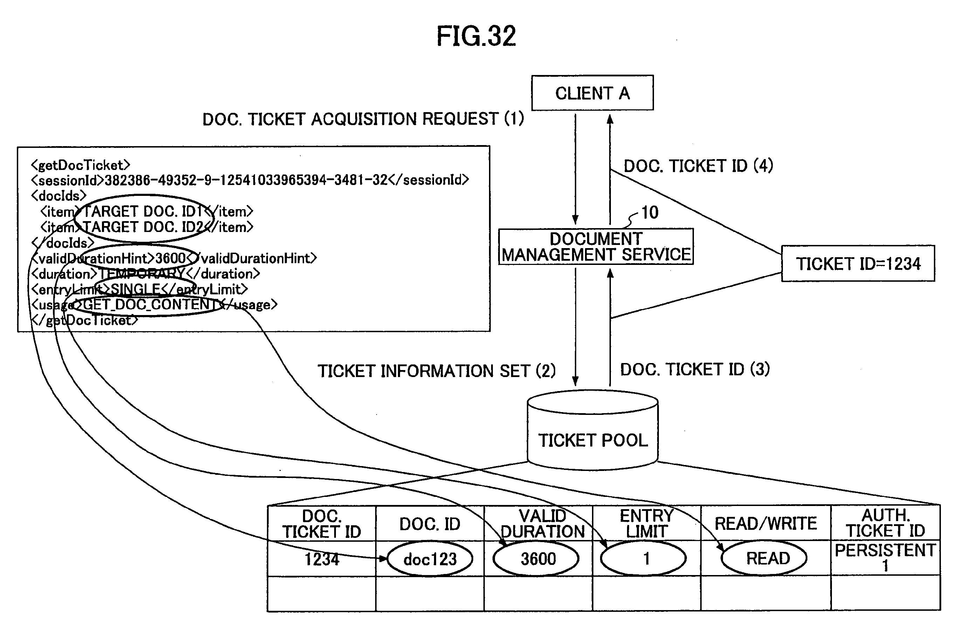

Next, an example of the processing of a single reading document ticket by the document-management service unit 10 and the authentication service unit 20 will be explained with reference to FIG. 32. In the following, only the difference between the previous embodiment and the present embodiment will be explained.

FIG. 32 is a diagram for explaining the processing concerning the temporary single reading document ticket.

In the processing of FIG. 32, the document-management service unit 10 receives a document ticket acquisition request as shown in FIG. 32, from the client A ((1) of FIG. 32). Then, the document-management service unit 10 sets the parameter based on the argument (parameter) of the getDocTicket method ((2) of FIG. 32), so that a document ticket (the temporary, single, reading document ticket in the example of FIG. 32) is created, and the created document ticket is stored and managed in the ticket pool.

And, the document-management service unit 10 incorporates the document ticket ID which identifies the created document ticket, into a document ticket acquisition response, and transmits the document ticket acquisition response to the client A of the requesting source node ((3) and (4) of FIG. 32).

Although it is omitted in the processing of FIG. 32, the processing may be configured as described above with FIG. 25 so that the document-management service unit 10 transmits an authentication ticket copy request to the authentication service unit 20 using the default authentication ticket ID associated with the session ID, and receives from the authentication service unit 20 the authentication ticket copy response corresponding to the authentication ticket copy request, and creates a document ticket containing the persistent authentication ticket ID (persistent1 in the example of FIG. 32) contained in the authentication ticket copy response received from the authentication service unit 20.

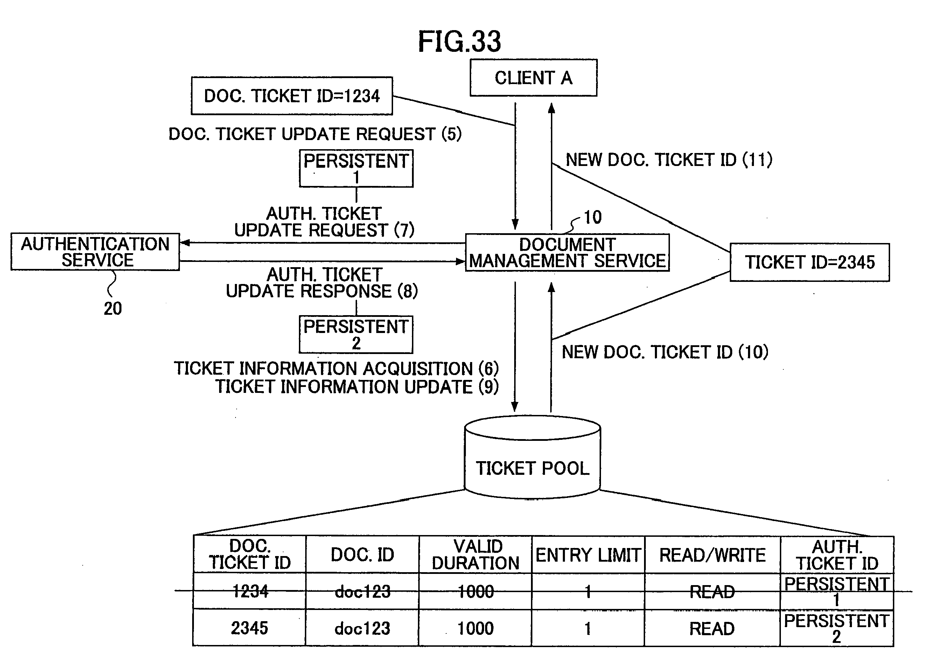

FIG. 33 is a diagram for explaining the processing concerning the temporary single reading document ticket.

In the processing of FIG. 33, the document-management service unit 10 receives a document ticket update request containing a document ticket ID, from the client A ((5) of FIG. 33). Then, the document-management service unit 10 acquires a corresponding ticket information (for example, persistent1) is acquired from the ticket pool based on the document ticket ID ((6) of FIG. 33). Then, the document-management service unit 10 transmits an authentication ticket update request including the ticket information, to the authentication service unit 20 ((7) of FIG. 33).

The document-management service unit 10 receives the authentication ticket update response containing the persistent2 which identifies the updated authentication ticket (a persistent authentication ticket in the example of FIG. 33), from the authentication service unit 20 ((8) of FIG. 33).

After the authentication ticket update response is received, the document-management service unit 10 updates the ticket information of the document ticket as shown in FIG. 33 ((9) of FIG. 33). Then, the document-management service unit 10 transmits the document ticket update response containing the new document ticket ID which identifies the updated document ticket (the new document ticket), to the client A of the requesting source node ((10) and (11) of FIG. 33).

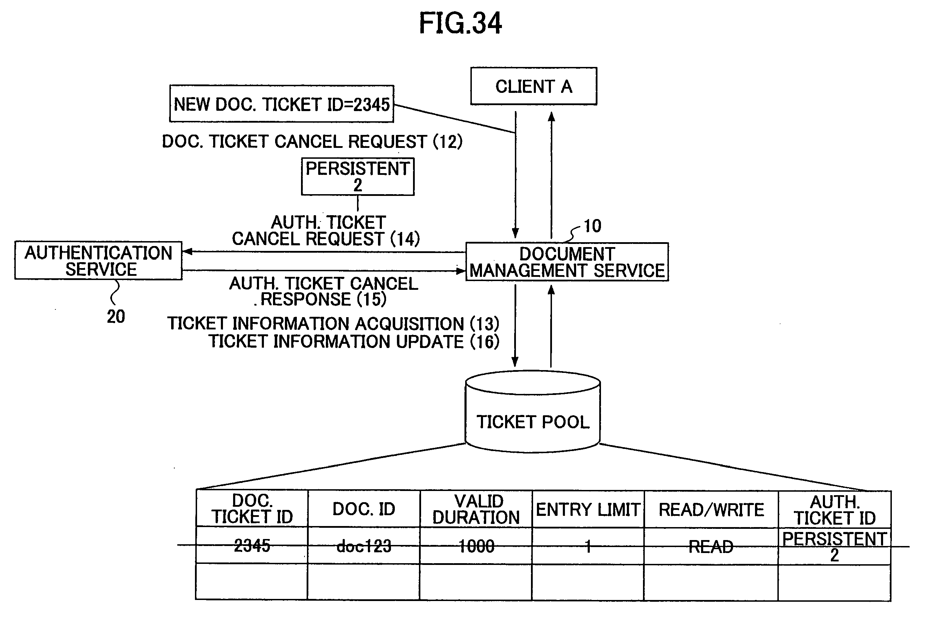

FIG. 34 is a diagram for explaining the processing concerning the temporary single reading document ticket.

In the processing of FIG. 34, the document-management service unit 10 receives a document ticket cancellation request containing a new document ticket ID from the client A ((12) of FIG. 34). Then, the document-management service unit 10 acquires a corresponding ticket information (for example, persistent2) from the ticket pool based on the new document ticket ID ((13) of FIG. 34). Then, the document-management service unit 10 transmits the authentication ticket cancellation request including the ticket information to the authentication service unit 20 ((14) of FIG. 34).

And the document-management service unit 10 receives the authentication ticket cancellation response including the cancellation result indicating that the authentication ticket has been canceled, from the authentication service unit 20 ((15) of FIG. 34). Then, the document-management service unit 10 deletes the document ticket as shown in FIG. 34 ((16) of FIG. 34).

Although it is omitted in the processing of FIG. 34, the processing may be configured so that the document-management service unit 10 creates a document ticket cancellation response including the cancellation result indicating that the document ticket has been deleted, and transmit the document ticket cancellation response to the client A of the requesting source node.

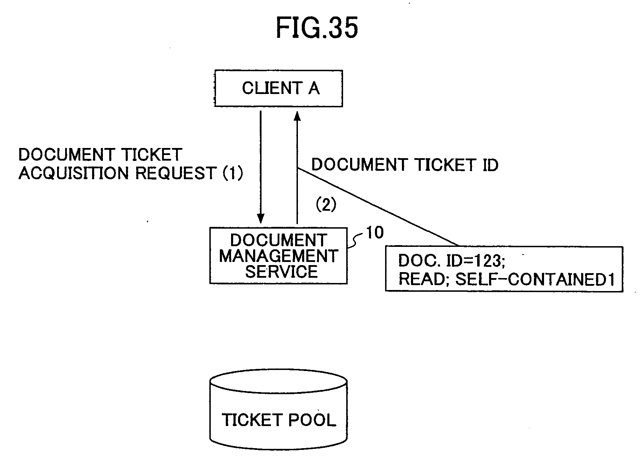

Next, an example of the processing of a permanent multiple reading document ticket by the document-management service unit 10 will be explained with reference to FIG. 35. In the following, only the difference between the previous embodiments and the present embodiment will be described.

FIG. 35 is a diagram for explaining the processing concerning a permanent multiple reading document ticket.

In the processing of FIG. 35, the document-management service unit 10 receives a document ticket acquisition request from the client A ((1) of FIG. 35). After this, the document-management service unit 10 creates a document ticket (a permanent multiple reading document ticket in the example of FIG. 35) based on the argument (parameter) of the getDocTicket method, sets the result of encoding of the created document ticket to a document ticket ID, and transmits a document ticket acquisition response containing the document ticket ID to the client A of the requesting source node ((2) of FIG. 35).

In the above-mentioned embodiment, there has been described the case where a persistent authentication ticket is used as for the temporary single reading document ticket (which is the same as for the temporary multiple document ticket and the permanent single document ticket). In order to further save the server resources, a self-contained authentication ticket may also be used. However, a security hole will be newly created if a self-contained authentication ticket is simply used. For this reason, it is desirable to use a self-contained authentication ticket with a valid duration (a predetermined value or a sufficiently long duration is set up when avoiding the use of a specific duration is desired). In this case, an authentication ticket is updated using the authentication service at the time of use or updating of a document ticket, and the old document ticket is canceled and a document ticket with a new ticket ID is created on the side of the document-management service so that the problem of security can be avoided. The cancellation of a document ticket can be performed by the document-management service side.

As described in the foregoing, according to the present invention, the document-management service and the authentication service can be provided in a simplified composition and can effectively respond to a change of the access right to a document or a folder.

## Claims

1. A document-management service device including a document-management service unit (10) which provides a service concerning management of a document, the document-management service unit (10) comprising:
a certification-information acquisition request receiving unit (109) receiving, from a client which requests acquisition of a certification information concerning the document or a document storing unit storing the document, a certification-information acquisition request containing information specifying an entry limit of the certification information and/or information specifying a valid duration of the certification information;
a certification-information creation unit (113) creating the certification information in response to the certification-information acquisition request;
a certification-information transmission unit (118) transmitting the certification information to the client;
a document operation request receiving unit (119) receiving, from either the requesting client or another client different from the requesting client, a document operation request concerning the document or the document storing unit, the document operation request containing the certification information; and
a document operation execution unit (125) performing a document operation to the document by using an access right of a user of the certification information, in response to the document operation request.

2. The document-management service device according to claim 1 wherein the document-management service unit (10) further comprises:
a re-authentication request transmitting unit (123) transmitting a re-authentication request of the user of the certification information to an authentication service unit before the document operation concerning the document or the document storing unit is performed; and
a re-authentication response receiving unit (124) receiving a re-authentication response containing user information of the user, from the authentication service unit.

3. The document-management service device according to claim 1 wherein the certification-information creation unit (113) creates the certification information in response to the certification-information acquisition request by associating an authentication information of the user received from an authentication service unit (20), with the certification information.

4. The document-management device according to claim 3 wherein the document-management service unit (10) further comprises a certification-information management unit (114) which associates the certification information with the authentication information of the user and manages the certification information associated with the authentication information.

5. The document-management service device according to claim 3 wherein the document-management service unit (10) further comprises a copy request transmitting unit (111) which transmits, in response to the certification-information acquisition request from the client, an authentication-information copy request to the authentication service unit (20), the authentication-information copy request containing the authentication information of the user received from the authentication service unit concerning the certification-information acquisition request, as well as the information specifying the entry limit of the certification information and/or the information specifying the valid duration of the certification information.

6. The document-management service device according to claim 3 wherein the document-management service unit (10) further comprises a copy response receiving unit (112) receiving an authentication-information copy response from the authentication service unit, the authentication-information copy response containing the authentication information of the user created by the authentication service unit (20).

7. An authentication service device including an authentication service unit (20) which provides a service concerning authentication, the authentication service unit (20) comprising:
a re-authentication request receiving unit (222) receiving a re-authentication request from a document-management service unit (10), the re-authentication request containing an authentication information of a user, the document-management service unit providing a service concerning management of a document;
a user information acquisition unit (210) acquiring a corresponding user information of the user in response to the re-authentication request; and
a re-authentication response transmitting unit (225) transmitting a re-authentication response to the document-management service unit (10), the re-authentication response containing the user information of the user acquired by the user information acquisition unit.

8. The authentication service device according to claim 7 wherein the authentication service unit (20) comprises:
an authentication-information copy request receiving unit (213) receiving an authentication-information copy request from the document-management service unit, the authentication-information copy request containing the authentication information of the user, as well as information specifying an entry limit of a certification information concerning the document or a document storing unit storing the document, and/or information specifying a valid duration of the certification information;
a copy unit (216, 218) creating the authentication information of the user in response to the authentication-information copy request, by copying user information associated with the authentication information of the user; and
a copy response transmitting unit (221) transmitting an authentication-information copy response containing the copied authentication information of the user created by the copy unit, to the document-management service unit.

9. The authentication service device according to claim 8 wherein the authentication service unit (20) further comprises a user-authentication-information management unit (217) which manages the authentication information of the user.

10. The authentication service device according to claim 8 wherein the authentication service unit (20) further comprises a copied-authentication-information management unit (217) which manages the copied authentication information of the user created by the copy unit.

11. A computer program product embodied therein for causing a computer to execute a document-management service method which provides a service concerning management of a document, the document-management service method comprising:
receiving, from a client which requests acquisition of a certification information concerning the document or a document storing unit storing the document, a certification-information acquisition request containing information specifying an entry limit of the certification information and/or information specifying a valid duration of the certification information;
creating the certification information in response to the certification-information acquisition request;
transmitting the certification information to the client;
receiving, from either the requesting client or another client different from the requesting client, a document operation request concerning the document or the document storing unit, the document operation request containing the certification information; and
performing a document operation to the document by using an access right of a user of the certification information, in response to the document operation request.

12. The computer program product according to claim 11 wherein the document-management service method further comprises:
transmitting a re-authentication request of the user of the certification information to an authentication service unit before the document operation concerning the document or the document storing unit is performed; and
receiving a re-authentication response containing user information of the user, from the authentication service unit.

13. The computer program product according to claim 11 wherein the certification information is created in response to the certification-information acquisition request by associating an authentication information of the user received from an authentication service unit, with the certification information.

14. The computer program product according to claim 13 wherein the document-management service method further comprises associating the certification information with the authentication information of the user and managing the certification information associated with the authentication information.

15. The computer program product according to claim 13 wherein the document-management service method further comprises transmiting, in response to the certification-information acquisition request from the client, an authentication-information copy request to the authentication service unit, the authentication-information copy request containing the authentication information of the user received from the authentication service unit concerning the certification-information acquisition request, as well as the information specifying the entry limit of the certification information and/or the information specifying the valid duration of the certification information.

16. The computer program product according to claim 13 wherein the document-management service method further comprises receiving an authentication-information copy response from the authentication service unit, the authentication-information copy response containing the authentication information of the user created by the authentication service unit.

17. A computer program product embodied therein for causing a computer to execute an authentication service method which provides a service concerning authentication, the authentication service method comprising:
receiving a re-authentication request from a document-management service unit, the re-authentication request containing an authentication information of a user, the document-management service unit providing a service concerning management of a document;
acquiring a corresponding user information of the user in response to the re-authentication request; and
transmitting a re-authentication response to the document-management service unit, the re-authentication response containing the acquired user information of the user.

18. The computer program product according to claim 17 wherein the authentication service method comprising:
receiving an authentication-information copy request from the document-management service unit, the authentication-information copy request containing the authentication information of the user, as well as information specifying an entry limit of a certification information concerning the document or a document storing unit storing the document, and/or information specifying a valid duration of the certification information;
creating the authentication information of the user in response to the authentication-information copy request, by copying user information associated with the authentication information of the user; and
transmitting an authentication-information copy response containing the copied authentication information of the user, to the document-management service unit.

19. The computer program product according to claim 18 wherein the authentication service method further comprising managing the authentication information of the user.

20. The computer program product according to claim 18 wherein the authentication service method further comprises managing the copied authentication information of the user created in response to the authentication-information copy request.

21. A computer-readable recording medium embodied therein for causing a computer to execute a document-management service method which provides a service concerning management of a document, the document-management service method comprising:
receiving, from a client which requests acquisition of a certification information concerning the document or a document storing unit storing the document, a certification-information acquisition request containing information specifying an entry limit of the certification information and/or information specifying a valid duration of the certification information;
creating the certification information in response to the certification-information acquisition request;
transmitting the certification information to the client;
receiving, from either the requesting client or another client different from the requesting client, a document operation request concerning the document or the document storing unit, the document operation request containing the certification information; and
performing a document operation to the document by using an access right of a user of the certification information, in response to the document operation request.

22. A computer-readable recording medium embodied therein for causing a computer to execute an authentication service method which provides a service concerning authentication, the authentication service method comprising:
receiving a re-authentication request from a document-management service unit, the re-authentication request containing an authentication information of a user, the document-management service unit providing a service concerning management of a document;
acquiring a corresponding user information of the user in response to the re-authentication request; and
transmitting a re-authentication response to the document-management service unit, the re-authentication response containing the acquired user information of the user.

23. A document-management service method which provides a service concerning management of a document, the document-management service method comprising:
receiving, from a client which requests acquisition of a certification information concerning the document or a document storing unit storing the document, a certification-information acquisition request containing information specifying an entry limit of the certification information and/or information specifying a valid duration of the certification information;
creating the certification information in response to the certification-information acquisition request;
transmitting the certification information to the client;
receiving, from either the requesting client or another client different from the requesting client, a document operation request concerning the document or the document storing unit, the document operation request containing the certification information; and
performing a document operation to the document by using an access right of a user of the certification information, in response to the document operation request.

24. An authentication service method which provides a service concerning authentication, the authentication service method comprising:
receiving a re-authentication request from a document-management service unit, the re-authentication request containing an authentication information of a user, the document-management service unit providing a service concerning management of a document;
acquiring a corresponding user information of the user in response to the re-authentication request; and
transmitting a re-authentication response to the document-management service unit, the re-authentication response containing the acquired user information of the user.
